# EUROPEAN PATENT SPECIFICATION

(11) **EP 3 949 628 B1**
(45) Date of publication and mention of the grant of the patent: **16.07.2025**
(21) Application number: 20779230.0
(22) Date of filing: 17.03.2020
(51) Int. Cl.: H04W 72/04, H04W 72/51

(54) **ASSIGNING OF RESOURCES BASED ON GROUPING OF WIRELESS DEVICES**
ZUWEISUNG VON RESSOURCEN AUF DER GRUNDLAGE DER GRUPPIERUNG VON DRAHTLOSEN VORRICHTUNGEN
ATTRIBUTION DE RESSOURCES SUR LA BASE D'UN REGROUPEMENT DE DISPOSITIFS SANS FIL

(30) Priority: 26.03.2019 US 201962824073 P
(43) Date of publication of application: 09.02.2022
(73) Proprietor: Telefonaktiebolaget LM Ericsson (publ), 164 83 Stockholm (SE)
(72) Inventor: SHAPIN, Alexey, 976 32 Luleå (SE); FRÖBERG OLSSON, Jonas, 590 74 LJUNGSBRO (SE); BLANKENSHIP, Yufei, KILDEER, Illinois 60047 (US); SACHS, Joachim, 191 34 SOLLENTUNA (SE)
(74) Representative: Ericsson
(86) International application number: PCT/SE2020/050274
(87) International publication number: WO 2020/197465

(56) References cited:
- WO-A1-2009/039760
- WO-A1-2014/098719
- WO-A1-2018/204730
- WO-A1-2018/228865
- WO-A2-2008/016280
- US-A1- 2016 165 591
- US-A1- 2018 324 830
- QUALCOMM: "UL inter-UE Tx Multiplexing and Prioritization", 3GPP TSG-RAN WG1 AH-1901, R1-1901315, 21 January 2019 (2019-01-21), pages 1 - 16, XP051601257

## Description

### TECHNICAL FIELD

The present disclosure relates to wireless communications and in particular, to assigning of resources based on grouping of wireless devices.

### BACKGROUND

Third Generation Partnership Project (3GPP) technology called New Radio (NR), also called Fifth Generation (5G), is being designed to support a wide range of data services including mobile broadband (MBB) and ultra-reliable low latency communications (URLLC). To enable optimized services, the transmission durations are expected to be different for different services, where URLLC may have a shorter transmission duration compared to MBB, to minimize latency in URLLC. Dynamic multiplexing of different services is highly desirable for efficient use of system resources and to achieve maximize capacity. However, it may occur that MBB data is transmitted at a time when a URLLC data packet arrives at the transmitter. It may therefore be desirable to interrupt the MBB transmission in certain time-frequency resources and perform a URLLC transmission on those resources instead. This method is sometimes called pre-emption or cancellation. Techniques to support pre-emption/cancellation are currently being considered.

Prior art patent aplication WO 2014/098719 A1 discloses a method by a base station comprising determining a type of service associated with a UE. The method further comprises determining whether the UE belongs to a first group of UEs or a second group of UEs, based on the type of service associated with the UE. Further, the method comprises, when the UE is determined to belong to the first group of UEs, allocating resources on the PUCCH to the UE in a first section of PUCCH resources. When the UE is determined to belong to the second group of UEs, allocating resources on the PUCCH to the UE in a second section of PUCCH resources. Moreover, the determining of whether a UE should belong to, or be associated to, a first or a second group of UEs may further be based on the "geometry" or location of the UE, e.g. the location within a cell associated with the base station with regard to the distance from the base station and also with regard to e.g. the distance to the neighboring cells/base stations.

### SUMMARY

Some embodiments advantageously provide methods and network nodes for assigning of resources based on grouping of wireless devices.

According to one aspect of the present disclosure, a network node configured to communicate with a wireless device, WD, is provided. The network node includes processing circuitry. The processing circuitry is configured to cause the network node to assign the wireless device to a group with other wireless devices based at least in part on a service type of the wireless device and based at least in part on at least one of: a preemption indication monitoring capability of the wireless device; a power control capability of the wireless device; and a spatial separateness of the wireless device with respect to at least one of the other wireless devices; and assign at least one resource to the wireless device according to the group to which the wireless device is assigned.

The preemption indication monitoring capability of the wireless device corresponds to whether the wireless device is capable of monitoring for an inter-WD uplink preemption indication message from the network node. The power control capability of the wireless device corresponds to whether the wireless device is capable of an enhanced dynamic uplink, UL, power control boost. The spatial separateness of the wireless device corresponds to whether the wireless device can be scheduled on a same time-frequency resource as the at least one of the other wireless devices based at least in part on the spatial separateness of the wireless device with respect to the at least one of the other wireless devices.

In some embodiments of this aspect, the group to which the wireless device is assigned is one of: a first group of wireless devices having different service types and being assigned a same first bandwidth part; and a second group of wireless devices having a same service type and being assigned a same second bandwidth part. In some embodiments of this aspect, the processing circuitry is further configured to cause the network node to assign the at least one resource to the wireless device by being configured to cause the network node to assign the first bandwidth part to the wireless device if the wireless device has the preemption indication monitoring capability and is of a first service type and assign the second bandwidth part to the wireless device if the wireless device does not have the preemption indication monitoring capability and is of the first service type.

In some embodiments of this aspect, the group to which the wireless device is assigned is one of: a first group of wireless devices having different service types and being assigned a same first bandwidth part; and a second group of wireless devices having different service types and being assigned a same second bandwidth part. In some embodiments of this aspect, the processing circuitry is further configured to cause the network node to assign the at least one resource to the wireless device by being configured to cause the network node to assign the first bandwidth part to the wireless device if the wireless device is power limited and is of a first service type and assign the second bandwidth part to the wireless device if the wireless device is not power limited and is of the first service type. In some embodiments of this aspect, the wireless device being power limited corresponds to one of: the wireless device lacking the power control capability; and the wireless device having the power control capability and using a maximum transmit power level; and the wireless device being not power limited corresponds to: the wireless device having the power control capability and the wireless device having sufficient power to increase transmit power without exceeding the maximum transmit power level.

In some embodiments of this aspect, the processing circuitry is further configured to cause the network node to assign the at least one resource to the wireless device by being configured to cause the network node to assign a same frequency resource to a first wireless device of a first service type and to a second wireless device of a second service type if the first wireless device and the second wireless device are spatially separable. In some embodiments of this aspect, the processing circuitry is further configured to cause the network node to assign the at least one resource to the wireless device by being configured to cause the network node to assign the wireless device to uplink on a carrier associated with an aggressor wireless device if the wireless device has the preemption indication monitoring capability.

In some embodiments of this aspect, the processing circuitry is configured to cause the network node to avoid scheduling of wireless devices that are not capable of the preemption indication monitoring in a bandwidth part when other wireless devices that are capable of preemption indication monitoring are scheduled in the bandwidth part. In some embodiments of this aspect, the processing circuitry is configured to cause the network node to allow coexistence of first and second service types in a same bandwidth part if wireless devices with the first service type that are scheduled in the bandwidth part are capable of the preemption indication monitoring. In some embodiments of this aspect, the processing circuitry is configured to cause the network node to partition a bandwidth part in at least one of frequency and time to allocate a first part of the bandwidth part for wireless devices having a same service type and to allocate a second part of the bandwidth part for wireless devices having different service types.

In some embodiments of this aspect, the service type of the wireless device corresponds to one of enhanced mobile broadband, eMBB, and ultra-reliable low latency communications, URLLC. In some embodiments of this aspect, the processing circuitry is further configured to cause the network node to assign the wireless device to a group with other wireless devices by being configured to cause the network node to assign the wireless device to a first group of wireless devices being assigned to a first bandwidth part if the wireless device at least one of corresponds to the URLLC service type and has the preemption indication monitoring capability; and assign the wireless device to a second group of wireless devices being assigned to a second bandwidth part if the wireless device corresponds to the eMBB service type and does not have the preemption indication monitoring capability.

In some embodiments of this aspect, the processing circuitry is further configured to cause the network node to assign the wireless device to a group with other wireless devices by being configured to cause the network node to assign the wireless device to a first group of wireless devices being assigned to a first bandwidth part if the wireless device at least one of: is power limited and is of the URLLC service type; and has the preemption indication monitoring capability and is of the eMBB service type; and assign the wireless device to a second group of wireless devices being assigned to a second bandwidth part if the wireless device at least one of: is not power limited and is of the URLLC service type; and does not have the preemption indication monitoring capability and is of the eMBB service type.

According to another aspect of the present disclosure, a method implemented in a network node configured to communicate with a wireless device, WD, is provided. The method includes assigning the wireless device to a group with other wireless devices based at least in part on a service type of the wireless device and based at least in part on at least one of: a preemption indication monitoring capability of the wireless device; a power control capability of the wireless device; and a spatial separateness of the wireless device with respect to at least one of the other wireless devices; and assigning at least one resource to the wireless device according to the group to which the wireless device is assigned.

The preemption indication monitoring capability of the wireless device corresponds to whether the wireless device is capable of monitoring for an inter-WD uplink preemption indication message from the network node. The power control capability of the wireless device corresponds to whether the wireless device is capable of an enhanced dynamic uplink, UL, power control boost. The spatial separateness of the wireless device corresponds to whether the wireless device can be scheduled on a same time-frequency resource as the at least one of the other wireless devices based at least in part on the spatial separateness of the wireless device with respect to the at least one of the other wireless devices.

In some embodiments of this aspect, the group to which the wireless device is assigned is one of: a first group of wireless devices having different service types and being assigned a same first bandwidth part; and a second group of wireless devices having a same service type and being assigned a same second bandwidth part. In some embodiments of this aspect, assigning the at least one resource to the wireless device further includes assigning the first bandwidth part to the wireless device if the wireless device has the preemption indication monitoring capability and is of a first service type and assign the second bandwidth part to the wireless device if the wireless device does not have the preemption indication monitoring capability and is of the first service type.

In some embodiments of this aspect, the group to which the wireless device is assigned is one of: a first group of wireless devices having different service types and being assigned a same first bandwidth part; and a second group of wireless devices having different service types and being assigned a same second bandwidth part. In some embodiments of this aspect, assigning the at least one resource to the wireless device further includes assigning the first bandwidth part to the wireless device if the wireless device is power limited and is of a first service type and assign the second bandwidth part to the wireless device if the wireless device is not power limited and is of the first service type.

In some embodiments of this aspect, the wireless device being power limited corresponds to one of: the wireless device lacking the power control capability; and the wireless device having the power control capability and using a maximum transmit power level. In some embodiments of this aspect, the wireless device being not power limited corresponds to the wireless device having the power control capability and the wireless device having sufficient power to increase transmit power without exceeding the maximum transmit power level. In some embodiments of this aspect, assigning the at least one resource to the wireless device further includes assigning a same frequency resource to a first wireless device of a first service type and to a second wireless device of a second service type if the first wireless device and the second wireless device are spatially separable.

In some embodiments of this aspect, assigning the at least one resource to the wireless device further includes assigning the wireless device to uplink on a carrier associated with an aggressor wireless device if the wireless device has the preemption indication monitoring capability. In some embodiments of this aspect, the method further includes avoiding scheduling of wireless devices that are not capable of the preemption indication monitoring in a bandwidth part when other wireless devices that are capable of preemption indication monitoring are scheduled in the bandwidth part. In some embodiments of this aspect, the method further includes allowing coexistence of first and second service types in a same bandwidth part if wireless devices with the first service type that are scheduled in the bandwidth part are capable of the preemption indication monitoring.

In some embodiments of this aspect, the method further includes partitioning a bandwidth part in at least one of frequency and time to allocate a first part of the bandwidth part for wireless devices having a same service type and to allocate a second part of the bandwidth part for wireless devices having different service types. In some embodiments of this aspect, the service type of the wireless device corresponds to one of enhanced mobile broadband, eMBB, and ultra-reliable low latency communications, URLLC.

In some embodiments of this aspect, assigning the wireless device to a group with other wireless devices further includes assigning the wireless device to a first group of wireless devices being assigned to a first bandwidth part if the wireless device at least one of corresponds to the URLLC service type and has the preemption indication monitoring capability; and assigning the wireless device to a second group of wireless devices being assigned to a second bandwidth part if the wireless device corresponds to the eMBB service type and does not have the preemption indication monitoring capability.

In some embodiments of this aspect, assigning the wireless device to a group with other wireless devices further includes assigning the wireless device to a first group of wireless devices being assigned to a first bandwidth part if the wireless device at least one of: is power limited and is of the URLLC service type; and has the preemption indication monitoring capability and is of the eMBB service type; and assigning the wireless device to a second group of wireless devices being assigned to a second bandwidth part if the wireless device at least one of: is not power limited and is of the URLLC service type; and does not have the preemption indication monitoring capability and is of the eMBB service type.

### BRIEF DESCRIPTION OF THE DRAWINGS

A more complete understanding of the present embodiments, and the attendant advantages and features thereof, will be more readily understood by reference to the following detailed description when considered in conjunction with the accompanying drawings wherein:
FIG. 1 is a schematic diagram of an exemplary network architecture illustrating a communication system connected via an intermediate network to a host computer according to the principles in the present disclosure;
FIG. 2 is a block diagram of a host computer communicating via a network node with a wireless device over an at least partially wireless connection according to some embodiments of the present disclosure;
FIG. 3 is a flowchart illustrating exemplary methods implemented in a communication system including a host computer, a network node and a wireless device for executing a client application at a wireless device according to some embodiments of the present disclosure;
FIG. 4 is a flowchart illustrating exemplary methods implemented in a communication system including a host computer, a network node and a wireless device for receiving user data at a wireless device according to some embodiments of the present disclosure;
FIG. 5 is a flowchart illustrating exemplary methods implemented in a communication system including a host computer, a network node and a wireless device for receiving user data from the wireless device at a host computer according to some embodiments of the present disclosure;
FIG. 6 is a flowchart illustrating exemplary methods implemented in a communication system including a host computer, a network node and a wireless device for receiving user data at a host computer according to some embodiments of the present disclosure;
FIG. 7 is a flowchart of an exemplary process in a network node for assigning of resources based on grouping of wireless devices according to some embodiments of the present disclosure;
FIG. 8 is a diagram of an example of grouping eMBB WDs having different capabilities;
FIG. 9 is a diagram of an example of grouping eMBB WDs having different capabilities and URLLC WDs in different radio conditions;
FIG. 10 is a diagram of an example of partitioning a bandwidth part in the frequency domain; and
FIG. 11 is a diagram of an example of partitioning a bandwidth part in the time domain.

### DETAILED DESCRIPTION

Inter-wireless device (WD) pre-emption/interruption/cancellation for downlink (DL) (i.e., for transmission from a base station to a WD) was standardized in Release 15 of the 3GPP wireless communication standards. Downlink pre-emption is supported where the assigned downlink resource is pre-empted by another downlink transmission (e.g., from URLLC). In this case, according to one option, an indication carried in the downlink control information (DCI) message, format 2_1, is dynamically signaled to the WD to inform the WD of the time and frequency region within its assigned resource that is pre-empted. This increases the likelihood of successful demodulation and decoding of the transport block(s) transmitted within the assigned resource. In addition, one bit named by Code Block Group (CBG) Flushing Out Information (CBGFI) in the DCI message for retransmission can be used to flush the hybrid automatic repeat request (HARQ) buffer that contains the pre-empting information.

Inter-WD pre-emption/interruption/cancellation for uplink (UL) transmission has been identified as an area that may need to be addressed to achieve the objectives for URLLC use cases. At least some of the discussion for 3GPP Release 16 has centered around two main alternatives: the pre-emption/cancellation indication based solutions (PI-based) and power control-based solutions (PC-based). A list of agreements made at previous meetings can be found at the end of this disclosure. However, design details have not been determined and are under discussion.

In short, a PC-based solution can be used to interrupt/"transmit over" legacy WDs which may not have special capabilities, but an aggressor WD may be in better radio conditions or have enough of a power budget to increase power. A PI-based solution does not set additional requirements on the aggressor WD, but the victim WD may be able to decode/receive a PI, which may require certain capabilities.

In the downlink, some WDs may not support monitoring of DCI format 2_1 because they may not have certain capabilities. In this case the WD performance might be negatively affected if interruption/cancellation takes place. The scheduler may try to avoid the interruption of such WDs, but the scheduling flexibility can suffer.

In the uplink, since a PI-based scheme may require the WD to be capable of PI reception and PC-based reception may work in some conditions, there may again be limitations on scheduling flexibility, which could lead to either blocking of URLLC transmissions or to operation at higher block error rates (BLER) than is required for URLLC.

Some embodiments include enhancements to radio resource management (RRM) and scheduling procedures by resource allocation to WDs having different cancellation/interruption/pre-emption-related capabilities on different bandwidth parts (BWPs) or on logical partitions of one BWP. Some embodiments facilitate URLLC reliability and latency requirements are met and decrease harmful impact on evolved MBB (eMBB) traffic in case eMBB and URLLC service type traffic co-exist in one cell.

Some embodiments include methods and algorithms for scheduling and radio resource management and can be divided into at least two different approaches. One approach is for the downlink and another approach is for the uplink. In both cases, it may be assumed that at least two different traffic service types have different reliability, latency or other quality of service (QoS) requirements.

Before describing in detail exemplary embodiments, it is noted that the embodiments reside primarily in combinations of apparatus components and processing steps related to assigning of resources based on grouping of wireless devices. Accordingly, components have been represented where appropriate by conventional symbols in the drawings, showing only those specific details that are pertinent to understanding the embodiments so as not to obscure the disclosure with details that will be readily apparent to those of ordinary skill in the art having the benefit of the description herein. Like numbers refer to like elements throughout the description.

As used herein, relational terms, such as "first" and "second," "top" and "bottom," and the like, may be used solely to distinguish one entity or element from another entity or element without necessarily requiring or implying any physical or logical relationship or order between such entities or elements. The terminology used herein is for the purpose of describing particular embodiments only and is not intended to be limiting of the concepts described herein. As used herein, the singular forms "a", "an" and "the" are intended to include the plural forms as well, unless the context clearly indicates otherwise. It will be further understood that the terms "comprises," "comprising," "includes" and/or "including" when used herein, specify the presence of stated features, integers, steps, operations, elements, and/or components, but do not preclude the presence or addition of one or more other features, integers, steps, operations, elements, components, and/or groups thereof.

In embodiments described herein, the joining term, "in communication with" and the like, may be used to indicate electrical or data communication, which may be accomplished by physical contact, induction, electromagnetic radiation, radio signaling, infrared signaling or optical signaling, for example. One having ordinary skill in the art will appreciate that multiple components may interoperate and modifications and variations are possible of achieving the electrical and data communication.

In some embodiments described herein, the term "coupled," "connected," and the like, may be used herein to indicate a connection, although not necessarily directly, and may include wired and/or wireless connections.

The term "network node" used herein can be any kind of network node comprised in a radio network which may further comprise any of base station (BS), radio base station, base transceiver station (BTS), base station controller (BSC), radio network controller (RNC), g Node B (gNB), evolved Node B (eNB or eNodeB), Node B, multi-standard radio (MSR) radio node such as MSR BS, multi-cell/multicast coordination entity (MCE), integrated access and backhaul (IAB) node, relay node, donor node controlling relay, radio access point (AP), transmission points, transmission nodes, Remote Radio Unit (RRU) Remote Radio Head (RRH), a core network node (e.g., mobile management entity (MME), self-organizing network (SON) node, a coordinating node, positioning node, MDT node, etc.), an external node (e.g., 3rd party node, a node external to the current network), nodes in distributed antenna system (DAS), a spectrum access system (SAS) node, an element management system (EMS), etc. The network node may also comprise test equipment. The term "radio node" used herein may be used to also denote a wireless device (WD) or a radio network node.

In some embodiments, the non-limiting terms wireless device (WD) or a user equipment (UE) are used interchangeably. The WD herein can be any type of wireless device capable of communicating with a network node or another WD over radio signals, such as wireless device (WD). The WD may also be a radio communication device, target device, device to device (D2D) WD, machine type WD or WD capable of machine to machine communication (M2M), low-cost and/or low-complexity WD, a sensor equipped with WD, Tablet, mobile terminals, smart phone, laptop embedded equipped (LEE), laptop mounted equipment (LME), USB dongles, Customer Premises Equipment (CPE), an Internet of Things (IoT) device, or a Narrowband IoT (NB-IOT) device etc.

Also, in some embodiments the generic term "radio network node" is used. It can be any kind of a radio network node which may comprise any of base station, radio base station, base transceiver station, base station controller, network controller, RNC, evolved Node B (eNB), Node B, gNB, Multi-cell/multicast Coordination Entity (MCE), relay node, access point, radio access point, Remote Radio Unit (RRU) Remote Radio Head (RRH).

In some embodiments, the "service type of a WD" may be considered different traffic service types having different reliability, latency and/or other QoS requirements, such as, for example URLLC service type and eMBB service type.

In some embodiments, a WD may be assigned to a group based on the service type of the WD and further based at least in part on one or more other WD factors, parameters, conditions and/or capabilities (e.g., preemption indication monitoring capability of the WD, power control capability of the WD and/or spatial separateness of the WD with respect to other WDs), as discussed in more detail below.

In some embodiments, assigning a WD to a group based at least in part on a "spatial separateness of a WD" may be considered assigning a WD to a group based at least in part on a WD property and/or condition and/or location and/or parameter(s) that indicate whether the wireless device can be scheduled on a same time-frequency resource as other wireless devices in the group due to the spatial separateness of the wireless device with respect to the other wireless devices, as with MU-MIMO technology. For example, the WD may be assigned to a group based on that the WD can be allocated a same time-frequency resource as at least one other WD in the group, but using a different antenna port/MIMO layer than the antenna port/MIMO layer of such at least one other WD.

In some embodiments, the wireless device being "power limited" means that the wireless device either lacks the power control capability or the wireless device has the power control capability but is using a maximum transmit power level (e.g., and therefore does not have enough in its power budget to boost transmit power to e.g., implement the PC-based interruption solution).

In some embodiments, the wireless device being "not power limited" means that the wireless device has the power control capability and the wireless device has sufficient power budget to increase its transmit power (e.g., to implement the PC-based interruption solution, without exceeding the maximum transmit power level allotted for the WD).

In some embodiments, the terms "aggressor WD" and "potential aggressor WD" are used interchangeably and may be used to indicate a WD whose transmission (e.g., DL or UL transmission) can pre-empt/interrupt/cancel a transmission of another WD (e.g., victim WD in this scenario) according to one or more of the techniques disclosed herein. It should be understood that a WD may be an aggressor WD in one scenario while being a victim WD in another scenario.

In some embodiments, the terms "pre-empt/pre-emption", "interrupt/interruption" and "cancel/cancellation" are used interchangeably.

In some embodiments, the terms "enhanced dynamic uplink power control boost" and "power control capability" may be used interchangeably and may be a power control-based (PC-based) pre-emption capability that implies a power boost of a URLLC transmission in a scheduling DCI while eMBB transmission continues as is. This is a backward compatible solution for Release 15 (Rel-15) eMBB WDs. Given that the PC-based pre-emption is a backward compatible scheme, Release 16 (Rel-16) capability may be used (so called "an enhanced dynamic uplink power control") for the URLLC WD while no special capability may be required for an overpowered eMBB WD. New capability may include:
1. configuration of two sets of P0 parameters via radio resource control (RRC): one set is for normal operation (legacy set) and a second set is of higher power for pre-empting operation. Every set includes values for all beams (quasi co-location (QCL_ states); and/or
2. support of DCI monitoring with power boost bit indicator (when the URLLC WD is scheduled, a DCI contains a special bit indicating which set of P0 parameters that should be used by the WD).

Note that although terminology from one particular wireless system, such as, for example, 3GPP LTE and/or New Radio (NR), may be used in this disclosure, this should not be seen as limiting the scope of the disclosure to only the aforementioned system. Other wireless systems, including without limitation Wide Band Code Division Multiple Access (WCDMA), Worldwide Interoperability for Microwave Access (WiMax), Ultra Mobile Broadband (UMB) and Global System for Mobile Communications (GSM), may also benefit from exploiting the ideas covered within this disclosure.

Note further, that functions described herein as being performed by a wireless device or a network node may be distributed over a plurality of wireless devices and/or network nodes. In other words, it is contemplated that the functions of the network node and wireless device described herein are not limited to performance by a single physical device and, in fact, can be distributed among several physical devices.

Unless otherwise defined, all terms (including technical and scientific terms) used herein have the same meaning as commonly understood by one of ordinary skill in the art to which this disclosure belongs. It will be further understood that terms used herein should be interpreted as having a meaning that is consistent with their meaning in the context of this specification and the relevant art and will not be interpreted in an idealized or overly formal sense unless expressly so defined herein.

Some embodiments include a method and a network node for assigning of resources based on grouping of wireless devices. According to one aspect, a network node has processing circuitry configured to perform method steps including assigning the WD to a group with other WDs 22 based at least in part on a service type of the WD. Service types may include eMBB and URLLC, for example. The assigning to a group is also based at least in part on one or more of: a preemption indication monitoring capability of the WD; a power control capability of the WD; or a spatial separateness of the WD. The processing circuitry is also configured to assign resources to the WD according to the group to which the WD is assigned.

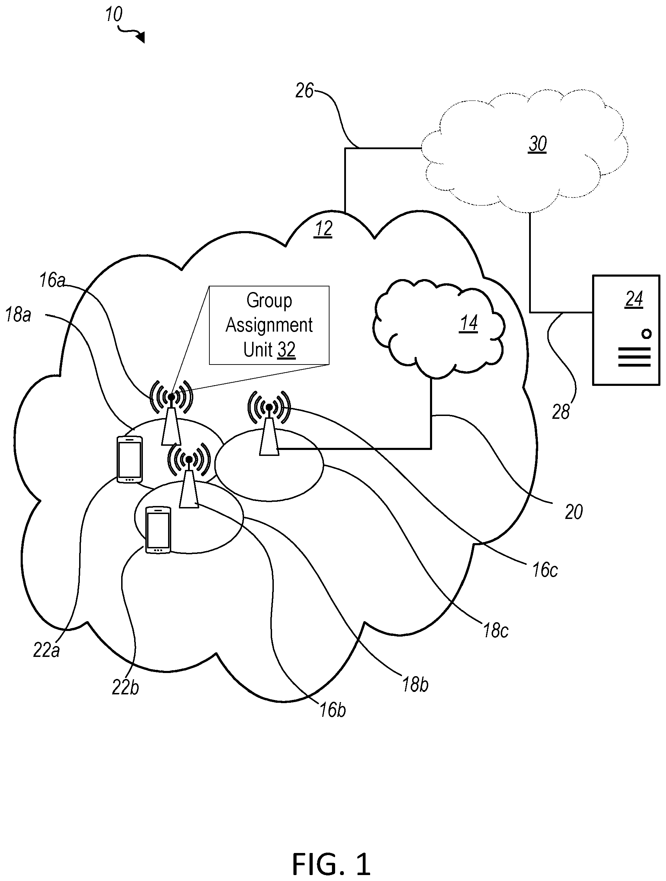

Referring now to the drawing figures, in which like elements are referred to by like reference numerals, there is shown in FIG. 1 a schematic diagram of a communication system 10, according to an embodiment, such as a 3GPP-type cellular network that may support standards such as LTE and/or NR (5G), which comprises an access network 12, such as a radio access network, and a core network 14. The access network 12 comprises a plurality of network nodes 16a, 16b, 16c (referred to collectively as network nodes 16), such as NBs, eNBs, gNBs or other types of wireless access points, each defining a corresponding coverage area 18a, 18b, 18c (referred to collectively as coverage areas 18). Each network node 16a, 16b, 16c is connectable to the core network 14 over a wired or wireless connection 20. A first wireless device (WD) 22a located in coverage area 18a is configured to wirelessly connect to, or be paged by, the corresponding network node 16a. A second WD 22b in coverage area 18b is wirelessly connectable to the corresponding network node 16b. While a plurality of WDs 22a, 22b (collectively referred to as wireless devices 22) are illustrated in this example, the disclosed embodiments are equally applicable to a situation where a sole WD is in the coverage area or where a sole WD is connecting to the corresponding network node 16. Note that although only two WDs 22 and three network nodes 16 are shown for convenience, the communication system may include many more WDs 22 and network nodes 16.

Also, it is contemplated that a WD 22 can be in simultaneous communication and/or configured to separately communicate with more than one network node 16 and more than one type of network node 16. For example, a WD 22 can have dual connectivity with a network node 16 that supports LTE and the same or a different network node 16 that supports NR. As an example, WD 22 can be in communication with an eNB for LTE/E-UTRAN and a gNB for NR/NG-RAN.

The communication system 10 may itself be connected to a host computer 24, which may be embodied in the hardware and/or software of a standalone server, a cloud-implemented server, a distributed server or as processing resources in a server farm. The host computer 24 may be under the ownership or control of a service provider, or may be operated by the service provider or on behalf of the service provider. The connections 26, 28 between the communication system 10 and the host computer 24 may extend directly from the core network 14 to the host computer 24 or may extend via an optional intermediate network 30. The intermediate network 30 may be one of, or a combination of more than one of, a public, private or hosted network. The intermediate network 30, if any, may be a backbone network or the Internet. In some embodiments, the intermediate network 30 may comprise two or more sub-networks (not shown).

The communication system of FIG. 1 as a whole enables connectivity between one of the connected WDs 22a, 22b and the host computer 24. The connectivity may be described as an over-the-top (OTT) connection. The host computer 24 and the connected WDs 22a, 22b are configured to communicate data and/or signaling via the OTT connection, using the access network 12, the core network 14, any intermediate network 30 and possible further infrastructure (not shown) as intermediaries. The OTT connection may be transparent in the sense that at least some of the participating communication devices through which the OTT connection passes are unaware of routing of uplink and downlink communications. For example, a network node 16 may not or need not be informed about the past routing of an incoming downlink communication with data originating from a host computer 24 to be forwarded (e.g., handed over) to a connected WD 22a. Similarly, the network node 16 need not be aware of the future routing of an outgoing uplink communication originating from the WD 22a towards the host computer 24.

A network node 16 is configured to include a group assignment unit 32 which is configured to assign the wireless device 22 to a group with other wireless devices 22 based at least in part on a service type of the wireless device 22 and based at least in part on at least one of: a preemption indication monitoring capability of the wireless device 22; a power control capability of the wireless device 22; and a spatial separateness of the wireless device 22 with respect to at least one of the other wireless devices 22; and assign at least one resource to the wireless device 22 according to the group to which the wireless device 22 is assigned.

In some embodiments, network node 16 includes a group assignment unit 32 which is configured to assign the WD 22 to a group with other WDs 22 based at least in part on one of a service type of the WD 22 and based at least in part on one or more of: a preemption indication monitoring capability of the WD 22, a power control capability of the WD 22; or a spatial separateness of the WD 22.

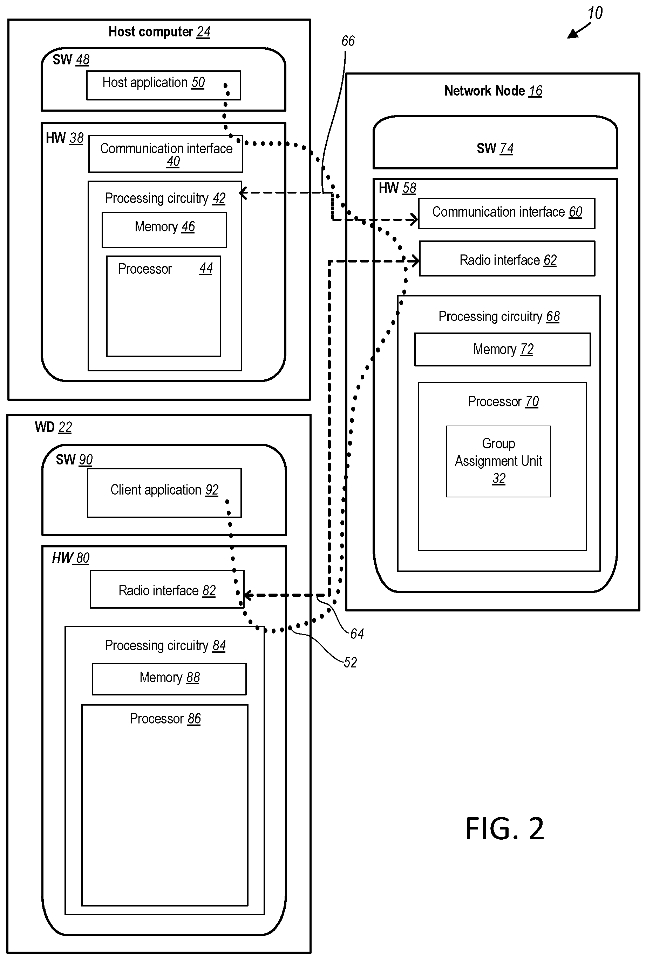

Example implementations, in accordance with an embodiment, of the WD 22, network node 16 and host computer 24 discussed in the preceding paragraphs will now be described with reference to FIG. 2. In a communication system 10, a host computer 24 comprises hardware (HW) 38 including a communication interface 40 configured to set up and maintain a wired or wireless connection with an interface of a different communication device of the communication system 10. The host computer 24 further comprises processing circuitry 42, which may have storage and/or processing capabilities. The processing circuitry 42 may include a processor 44 and memory 46. In particular, in addition to or instead of a processor, such as a central processing unit, and memory, the processing circuitry 42 may comprise integrated circuitry for processing and/or control, e.g., one or more processors and/or processor cores and/or FPGAs (Field Programmable Gate Array) and/or ASICs (Application Specific Integrated Circuitry) adapted to execute instructions. The processor 44 may be configured to access (e.g., write to and/or read from) memory 46, which may comprise any kind of volatile and/or nonvolatile memory, e.g., cache and/or buffer memory and/or RAM (Random Access Memory) and/or ROM (Read-Only Memory) and/or optical memory and/or EPROM (Erasable Programmable Read-Only Memory).

Processing circuitry 42 may be configured to control any of the methods and/or processes described herein and/or to cause such methods, and/or processes to be performed, e.g., by host computer 24. Processor 44 corresponds to one or more processors 44 for performing host computer 24 functions described herein. The host computer 24 includes memory 46 that is configured to store data, programmatic software code and/or other information described herein. In some embodiments, the software 48 and/or the host application 50 may include instructions that, when executed by the processor 44 and/or processing circuitry 42, causes the processor 44 and/or processing circuitry 42 to perform the processes described herein with respect to host computer 24. The instructions may be software associated with the host computer 24.

The software 48 may be executable by the processing circuitry 42. The software 48 includes a host application 50. The host application 50 may be operable to provide a service to a remote user, such as a WD 22 connecting via an OTT connection 52 terminating at the WD 22 and the host computer 24. In providing the service to the remote user, the host application 50 may provide user data which is transmitted using the OTT connection 52. The "user data" may be data and information described herein as implementing the described functionality. In one embodiment, the host computer 24 may be configured for providing control and functionality to a service provider and may be operated by the service provider or on behalf of the service provider. The processing circuitry 42 of the host computer 24 may enable the host computer 24 to observe, monitor, control, transmit to and/or receive from the network node 16 and or the wireless device 22.

The communication system 10 further includes a network node 16 provided in a communication system 10 and including hardware 58 enabling it to communicate with the host computer 24 and with the WD 22. The hardware 58 may include a communication interface 60 for setting up and maintaining a wired or wireless connection with an interface of a different communication device of the communication system 10, as well as a radio interface 62 for setting up and maintaining at least a wireless connection 64 with a WD 22 located in a coverage area 18 served by the network node 16. The radio interface 62 may be formed as or may include, for example, one or more RF transmitters, one or more RF receivers, and/or one or more RF transceivers. The communication interface 60 may be configured to facilitate a connection 66 to the host computer 24. The connection 66 may be direct or it may pass through a core network 14 of the communication system 10 and/or through one or more intermediate networks 30 outside the communication system 10.

In the embodiment shown, the hardware 58 of the network node 16 further includes processing circuitry 68. The processing circuitry 68 may include a processor 70 and a memory 72. In particular, in addition to or instead of a processor, such as a central processing unit, and memory, the processing circuitry 68 may comprise integrated circuitry for processing and/or control, e.g., one or more processors and/or processor cores and/or FPGAs (Field Programmable Gate Array) and/or ASICs (Application Specific Integrated Circuitry) adapted to execute instructions. The processor 70 may be configured to access (e.g., write to and/or read from) the memory 72, which may comprise any kind of volatile and/or nonvolatile memory, e.g., cache and/or buffer memory and/or RAM (Random Access Memory) and/or ROM (Read-Only Memory) and/or optical memory and/or EPROM (Erasable Programmable Read-Only Memory).

Thus, the network node 16 further has software 74 stored internally in, for example, memory 72, or stored in external memory (e.g., database, storage array, network storage device, etc.) accessible by the network node 16 via an external connection. The software 74 may be executable by the processing circuitry 68. The processing circuitry 68 may be configured to control any of the methods and/or processes described herein and/or to cause such methods, and/or processes to be performed, e.g., by network node 16. Processor 70 corresponds to one or more processors 70 for performing network node 16 functions described herein. The memory 72 is configured to store data, programmatic software code and/or other information described herein. In some embodiments, the software 74 may include instructions that, when executed by the processor 70 and/or processing circuitry 68, causes the processor 70 and/or processing circuitry 68 to perform the processes described herein with respect to network node 16. For example, processing circuitry 68 of the network node 16 may include group assignment unit 32 configured to assign the WD to a group with other WDs 22 based at least in part on one of a service type of the WD and based at least in part on one or more of: a preemption indication monitoring capability of the WD, a power control capability of the WD; or a spatial separateness of the WD.

The communication system 10 further includes the WD 22 already referred to. The WD 22 may have hardware 80 that may include a radio interface 82 configured to set up and maintain a wireless connection 64 with a network node 16 serving a coverage area 18 in which the WD 22 is currently located. The radio interface 82 may be formed as or may include, for example, one or more RF transmitters, one or more RF receivers, and/or one or more RF transceivers.

The hardware 80 of the WD 22 further includes processing circuitry 84. The processing circuitry 84 may include a processor 86 and memory 88. In particular, in addition to or instead of a processor, such as a central processing unit, and memory, the processing circuitry 84 may comprise integrated circuitry for processing and/or control, e.g., one or more processors and/or processor cores and/or FPGAs (Field Programmable Gate Array) and/or ASICs (Application Specific Integrated Circuitry) adapted to execute instructions. The processor 86 may be configured to access (e.g., write to and/or read from) memory 88, which may comprise any kind of volatile and/or nonvolatile memory, e.g., cache and/or buffer memory and/or RAM (Random Access Memory) and/or ROM (Read-Only Memory) and/or optical memory and/or EPROM (Erasable Programmable Read-Only Memory).

Thus, the WD 22 may further comprise software 90, which is stored in, for example, memory 88 at the WD 22, or stored in external memory (e.g., database, storage array, network storage device, etc.) accessible by the WD 22. The software 90 may be executable by the processing circuitry 84. The software 90 may include a client application 92. The client application 92 may be operable to provide a service to a human or non-human user via the WD 22, with the support of the host computer 24. In the host computer 24, an executing host application 50 may communicate with the executing client application 92 via the OTT connection 52 terminating at the WD 22 and the host computer 24. In providing the service to the user, the client application 92 may receive request data from the host application 50 and provide user data in response to the request data. The OTT connection 52 may transfer both the request data and the user data. The client application 92 may interact with the user to generate the user data that it provides.

The processing circuitry 84 may be configured to control any of the methods and/or processes described herein and/or to cause such methods, and/or processes to be performed, e.g., by WD 22. The processor 86 corresponds to one or more processors 86 for performing WD 22 functions described herein. The WD 22 includes memory 88 that is configured to store data, programmatic software code and/or other information described herein. In some embodiments, the software 90 and/or the client application 92 may include instructions that, when executed by the processor 86 and/or processing circuitry 84, causes the processor 86 and/or processing circuitry 84 to perform the processes described herein with respect to WD 22

In some embodiments, the inner workings of the network node 16, WD 22, and host computer 24 may be as shown in FIG. 2 and independently, the surrounding network topology may be that of FIG. 1.

In FIG. 2, the OTT connection 52 has been drawn abstractly to illustrate the communication between the host computer 24 and the wireless device 22 via the network node 16, without explicit reference to any intermediary devices and the precise routing of messages via these devices. Network infrastructure may determine the routing, which it may be configured to hide from the WD 22 or from the service provider operating the host computer 24, or both. While the OTT connection 52 is active, the network infrastructure may further take decisions by which it dynamically changes the routing (e.g., on the basis of load balancing consideration or reconfiguration of the network).

The wireless connection 64 between the WD 22 and the network node 16 is in accordance with the teachings of the embodiments described throughout this disclosure. One or more of the various embodiments improve the performance of OTT services provided to the WD 22 using the OTT connection 52, in which the wireless connection 64 may form the last segment. More precisely, the teachings of some of these embodiments may improve the data rate, latency, and/or power consumption and thereby provide benefits such as reduced user waiting time, relaxed restriction on file size, better responsiveness, extended battery lifetime, etc.

In some embodiments, a measurement procedure may be provided for the purpose of monitoring data rate, latency and other factors on which the one or more embodiments improve. There may further be an optional network functionality for reconfiguring the OTT connection 52 between the host computer 24 and WD 22, in response to variations in the measurement results. The measurement procedure and/or the network functionality for reconfiguring the OTT connection 52 may be implemented in the software 48 of the host computer 24 or in the software 90 of the WD 22, or both. In embodiments, sensors (not shown) may be deployed in or in association with communication devices through which the OTT connection 52 passes; the sensors may participate in the measurement procedure by supplying values of the monitored quantities exemplified above, or supplying values of other physical quantities from which software 48, 90 may compute or estimate the monitored quantities. The reconfiguring of the OTT connection 52 may include message format, retransmission settings, preferred routing etc.; the reconfiguring need not affect the network node 16, and it may be unknown or imperceptible to the network node 16. Some such procedures and functionalities may be known and practiced in the art. In certain embodiments, measurements may involve proprietary WD signaling facilitating the host computer's 24 measurements of throughput, propagation times, latency and the like. In some embodiments, the measurements may be implemented in that the software 48, 90 causes messages to be transmitted, in particular empty or 'dummy' messages, using the OTT connection 52 while it monitors propagation times, errors etc.

Thus, in some embodiments, the host computer 24 includes processing circuitry 42 configured to provide user data and a communication interface 40 that is configured to forward the user data to a cellular network for transmission to the WD 22. In some embodiments, the cellular network also includes the network node 16 with a radio interface 62. In some embodiments, the network node 16 is configured to, and/or the network node's 16 processing circuitry 68 is configured to perform the functions and/or methods described herein for preparing/initiating/maintaining/supporting/ending a transmission to the WD 22, and/or preparing/terminating/maintaining/supporting/ending in receipt of a transmission from the WD 22.

In some embodiments, the host computer 24 includes processing circuitry 42 and a communication interface 40 that is configured to a communication interface 40 configured to receive user data originating from a transmission from a WD 22 to a network node 16. In some embodiments, the WD 22 is configured to, and/or comprises a radio interface 82 and/or processing circuitry 84 configured to perform the functions and/or methods described herein for preparing/initiating/maintaining/supporting/ending a transmission to the network node 16, and/or preparing/terminating/maintaining/supporting/ending in receipt of a transmission from the network node 16.

Although FIGS. 1 and 2 show various "units" such as group assignment unit 32 as being within a processor, it is contemplated that these units may be implemented such that a portion of the unit is stored in a corresponding memory within the processing circuitry. In other words, the units may be implemented in hardware or in a combination of hardware and software within the processing circuitry.

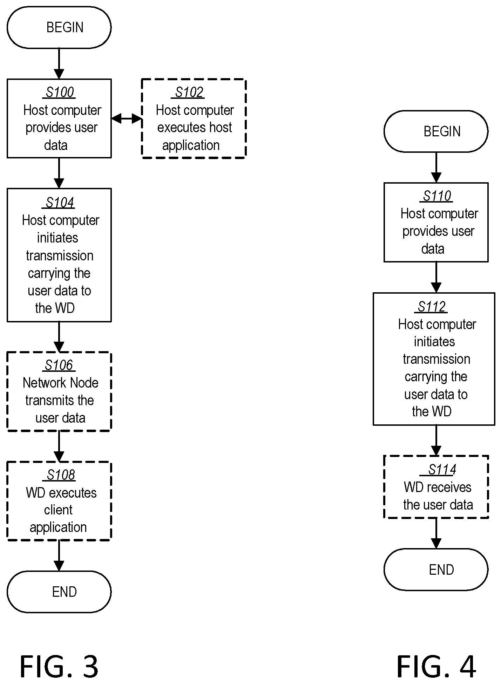

FIG. 3 is a flowchart illustrating an exemplary method implemented in a communication system, such as, for example, the communication system of FIGS. 1 and 2, in accordance with one embodiment. The communication system may include a host computer 24, a network node 16 and a WD 22, which may be those described with reference to FIG. 2. In a first step of the method, the host computer 24 provides user data (Block S 100). In an optional substep of the first step, the host computer 24 provides the user data by executing a host application, such as, for example, the host application 50 (Block S102). In a second step, the host computer 24 initiates a transmission carrying the user data to the WD 22 (Block S104). In an optional third step, the network node 16 transmits to the WD 22 the user data which was carried in the transmission that the host computer 24 initiated, in accordance with the teachings of the embodiments described throughout this disclosure (Block S106). In an optional fourth step, the WD 22 executes a client application, such as, for example, the client application 92, associated with the host application 50 executed by the host computer 24 (Block S108).

FIG. 4 is a flowchart illustrating an exemplary method implemented in a communication system, such as, for example, the communication system of FIG. 1, in accordance with one embodiment. The communication system may include a host computer 24, a network node 16 and a WD 22, which may be those described with reference to FIGS. 1 and 2. In a first step of the method, the host computer 24 provides user data (Block S110). In an optional substep (not shown) the host computer 24 provides the user data by executing a host application, such as, for example, the host application 50. In a second step, the host computer 24 initiates a transmission carrying the user data to the WD 22 (Block S112). The transmission may pass via the network node 16, in accordance with the teachings of the embodiments described throughout this disclosure. In an optional third step, the WD 22 receives the user data carried in the transmission (Block S114).

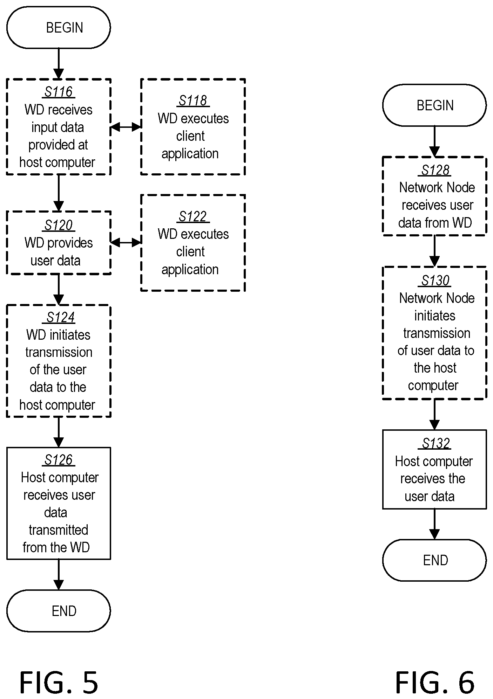

FIG. 5 is a flowchart illustrating an exemplary method implemented in a communication system, such as, for example, the communication system of FIG. 1, in accordance with one embodiment. The communication system may include a host computer 24, a network node 16 and a WD 22, which may be those described with reference to FIGS. 1 and 2. In an optional first step of the method, the WD 22 receives input data provided by the host computer 24 (Block S116). In an optional substep of the first step, the WD 22 executes the client application 92, which provides the user data in reaction to the received input data provided by the host computer 24 (Block S118). Additionally or alternatively, in an optional second step, the WD 22 provides user data (Block S120). In an optional substep of the second step, the WD provides the user data by executing a client application, such as, for example, client application 92 (Block S122). In providing the user data, the executed client application 92 may further consider user input received from the user. Regardless of the specific manner in which the user data was provided, the WD 22 may initiate, in an optional third substep, transmission of the user data to the host computer 24 (Block S124). In a fourth step of the method, the host computer 24 receives the user data transmitted from the WD 22, in accordance with the teachings of the embodiments described throughout this disclosure (Block S126).

FIG. 6 is a flowchart illustrating an exemplary method implemented in a communication system, such as, for example, the communication system of FIG. 1, in accordance with one embodiment. The communication system may include a host computer 24, a network node 16 and a WD 22, which may be those described with reference to FIGS. 1 and 2. In an optional first step of the method, in accordance with the teachings of the embodiments described throughout this disclosure, the network node 16 receives user data from the WD 22 (Block S128). In an optional second step, the network node 16 initiates transmission of the received user data to the host computer 24 (Block S130). In a third step, the host computer 24 receives the user data carried in the transmission initiated by the network node 16 (Block S132).

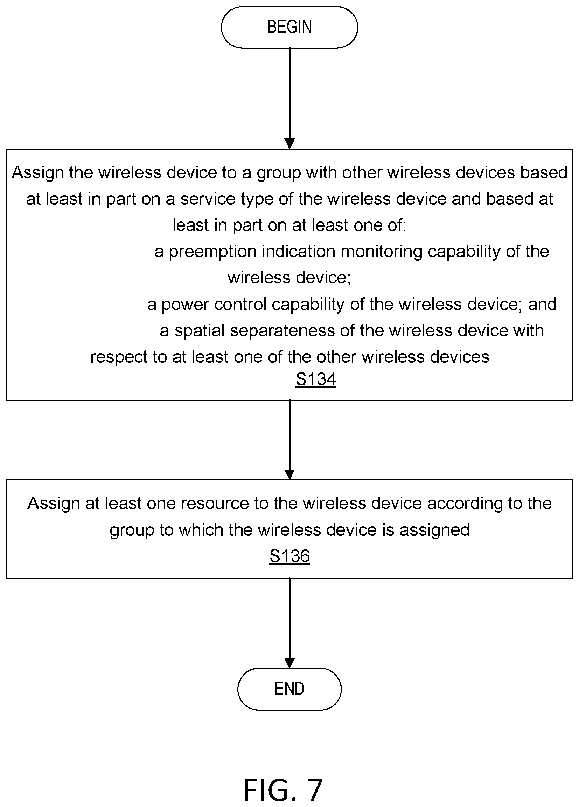

FIG. 7 is a flowchart of an exemplary process in a network node for assigning of resources based on grouping of wireless devices according to some embodiments of the present disclosure. One or more blocks described herein may be performed by one or more elements of network node 16 such as by one or more of processing circuitry 68 (including the group assignment unit 32), processor 70, radio interface 62 and/or communication interface 60. Network node 16 such as via processing circuitry 68 and/or processor 70 and/or radio interface 62 and/or communication interface 60 is configured to (Block S 134) assign the wireless device 22 to a group with other wireless devices 22 based at least in part on a service type of the wireless device 22 and based at least in part on at least one of: a preemption indication monitoring capability of the wireless device 22; a power control capability of the wireless device 22; and a spatial separateness of the wireless device 22 with respect to at least one of the other wireless devices 22. Network node 16, such as via processing circuitry 68 and/or processor 70 and/or radio interface 62 and/or communication interface 60, is configured to (Block S136) assign at least one resource to the wireless device 22 according to the group to which the wireless device 22 is assigned.

In some embodiments, the preemption indication monitoring capability of the wireless device 22 corresponds to whether the wireless device 22 is capable of monitoring for an inter-WD uplink preemption indication message from the network node 16. In some embodiments, the power control capability of the wireless device 22 corresponds to whether the wireless device 22 is capable of an enhanced dynamic uplink, UL, power control boost. In some embodiments, the spatial separateness of the wireless device 22 corresponds to whether the wireless device 22 can be scheduled on a same time-frequency resource as the at least one of the other wireless devices 22 based at least in part on the spatial separateness of the wireless device 22 with respect to the at least one of the other wireless devices 22. In some embodiments, the spatial separateness of the wireless device 22 corresponds to whether the wireless device 22 can be scheduled on a same time-frequency resource, but different antenna port/MIMO layer, as the at least one of the other wireless devices 22 based at least in part on the spatial separateness of the wireless device 22 with respect to the at least one of the other wireless devices 22.

In some embodiments, the group to which the wireless device 22 is assigned is one of: a first group of wireless devices 22 having different service types and being assigned a same first bandwidth part; and a second group of wireless devices 22 having a same service type and being assigned a same second bandwidth part. In some embodiments, the processing circuitry 68 and/or processor 70 and/or radio interface 62 and/or communication interface 60 is further configured to cause the network node 16 to assign the at least one resource to the wireless device 22 by being configured to cause the network node to: assign the first bandwidth part to the wireless device 22 if the wireless device 22 has the preemption indication monitoring capability and is of a first service type and assign the second bandwidth part to the wireless device 22 if the wireless device 22 does not have the preemption indication monitoring capability and is of the first service type.

In some embodiments, the group to which the wireless device 22 is assigned is one of: a first group of wireless devices 22 having different service types and being assigned a same first bandwidth part; and a second group of wireless devices 22 having different service types and being assigned a same second bandwidth part. In some embodiments, the processing circuitry 68 and/or processor 70 and/or radio interface 62 and/or communication interface 60 is further configured to cause the network node 16 to assign the at least one resource to the wireless device 22 by being configured to cause the network node to: assign the first bandwidth part to the wireless device 22 if the wireless device 22 is power limited and is of a first service type and assign the second bandwidth part to the wireless device 22 if the wireless device 22 is not power limited and is of the first service type.

In some embodiments, the wireless device 22 being power limited corresponds to one of: the wireless device 22 lacking the power control capability; and the wireless device 22 having the power control capability and using a maximum transmit power level. In some embodiments, the wireless device 22 being not power limited corresponds to: the wireless device 22 having the power control capability and the wireless device 22 having sufficient power to increase transmit power without exceeding the maximum transmit power level.

In some embodiments, the processing circuitry 68 and/or processor 70 and/or radio interface 62 and/or communication interface 60 is further configured to cause the network node 16 to assign the at least one resource to the wireless device 22 by being configured to cause the network node to assign a same frequency resource to a first wireless device 22 of a first service type and to a second wireless device 22 of a second service type if the first wireless device 22 and the second wireless device 22 are spatially separable. In some embodiments, the processing circuitry 68 and/or processor 70 and/or radio interface 62 and/or communication interface 60 is further configured to cause the network node 16 to assign the at least one resource to the wireless device 22 by being configured to cause the network node 16 to: assign the wireless device 22 to uplink on a carrier associated with an aggressor wireless device 22 if the wireless device 22 has the preemption indication monitoring capability.

In some embodiments, the processing circuitry 68 and/or processor 70 and/or radio interface 62 and/or communication interface 60 is configured to cause the network node 16 to avoid scheduling of wireless devices 22 that are not capable of the preemption indication monitoring in a bandwidth part when other wireless devices 22 that are capable of preemption indication monitoring are scheduled in the bandwidth part. In some embodiments, the processing circuitry 68 and/or processor 70 and/or radio interface 62 and/or communication interface 60 is configured to cause the network node 16 to allow coexistence of first and second service types in a same bandwidth part if wireless devices 22 with the first service type that are scheduled in the bandwidth part are capable of the preemption indication monitoring.

In some embodiments, the processing circuitry 68 and/or processor 70 and/or radio interface 62 and/or communication interface 60 is configured to cause the network node 16 to partition a bandwidth part in at least one of frequency and time to allocate a first part of the bandwidth part for wireless devices 22 having a same service type and to allocate a second part of the bandwidth part for wireless devices 22 having different service types. In some embodiments, the service type of the wireless device 22 corresponds to one of enhanced mobile broadband, eMBB, and ultra-reliable low latency communications, URLLC.

In some embodiments, the processing circuitry 68 and/or processor 70 and/or radio interface 62 and/or communication interface 60 is further configured to cause the network node 16 to assign the wireless device 22 to a group with other wireless devices 22 by being configured to cause the network node 16 to: assign the wireless device 22 to a first group of wireless devices 22 being assigned to a first bandwidth part if the wireless device 22 at least one of corresponds to the URLLC service type and has the preemption indication monitoring capability; and assign the wireless device 22 to a second group of wireless devices 22 being assigned to a second bandwidth part if the wireless device 22 corresponds to the eMBB service type and does not have the preemption indication monitoring capability.

In some embodiments, the processing circuitry 68 and/or processor 70 and/or radio interface 62 and/or communication interface 60 is further configured to cause the network node 16 to assign the wireless device 22 to a group with other wireless devices 22 by being configured to cause the network node 16 to: assign the wireless device 22 to a first group of wireless devices 22 being assigned to a first bandwidth part if the wireless device 22 at least one of: is power limited and is of the URLLC service type; and has the preemption indication monitoring capability and is of the eMBB service type; and assign the wireless device 22 to a second group of wireless devices 22 being assigned to a second bandwidth part if the wireless device 22 at least one of: is not power limited and is of the URLLC service type; and does not have the preemption indication monitoring capability and is of the eMBB service type.

In some embodiments, network node 16 such as via processing circuitry 68 and/or processor 70 and/or radio interface 62 and/or communication interface 60 is configured to assign the WD 22 to a group with other WDs 22 based at least in part on one of a service type of the WD 22 and based at least in part on one or more of: a preemption indication monitoring capability of the WD 22, a power control capability of the WD 22; or a spatial separateness of the WD 22. The process also includes assigning resources to the WD 22 according to the group to which the WD 22 is assigned. In one or more embodiments, the service type is not explicitly signaled to the WD 22 assuming service type URLLC/eMBB, for example. In one or more embodiments, the grouping described herein is based at least in part on preemption capability and/or lack thereof when performing an initial random access procedure.

Having described the general process flow of arrangements of the disclosure and having provided examples of hardware and software arrangements for implementing the processes and functions of the disclosure, the sections below provide details and examples of arrangements for assigning of resources based on grouping of wireless devices.

### Uplink

In one or more embodiments of the uplink description, an assumption is made that there are at least two possible approaches to inter-WD pre-emption, where one requires special victim WD capability, while another one can be used with all WDs 22, including legacy WDs 22 without special capabilities.

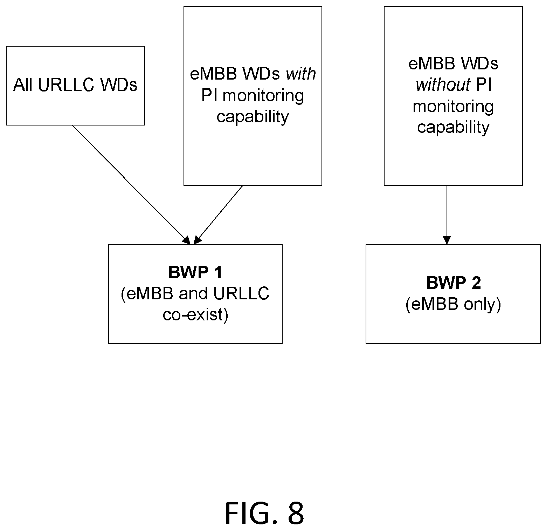

In one embodiment, when at least two BWPs are configured in a cell, the network node 16, via, for example, processing circuitry 68 and/or group assignment unit 32, allocates all or a majority of legacy WDs 22 or WDs 22 without PI monitoring capability to a BWP where the pre-emption cannot happen. In a typical example, Release-15 eMBB- compatible WDs 22 and some Release 16 compatible WDs 22 do not have UL pre-emption monitoring capability, and these are called non-UL-PI-capable WDs 22. Other Release 16 (and later) eMBB WDs 22 have UL pre-emption monitoring capability, and these are called UL-PI-capable WDs 22. Non-UL-PI-capable WDs 22 are allocated to BWP1 so that they do not co-exist with aggressor WDs 22. Conversely, the embodiment also can be interpreted such that in another BWP (e.g., BWP 2), where eMBB and URLLC services co-exist, the network node 16 allocates resources only to eMBB WDs 22 which have PI monitoring capability (i.e., certain Release 16 and later eMBB WDs 22), but not Release 15 eMBB WDs 22. This is illustrated in FIG. 8.

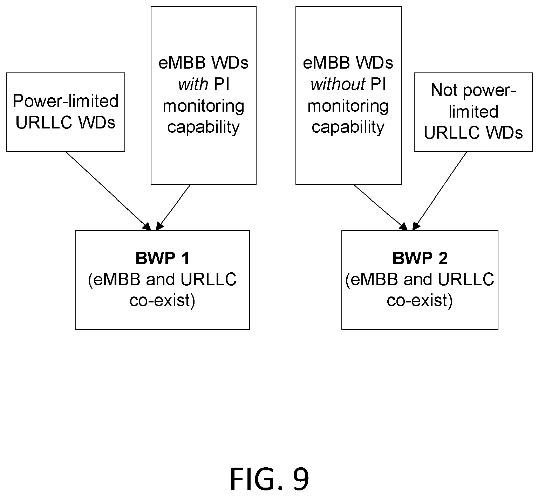

In another embodiment, URLLC WDs 22 can also be allocated to different BWPs according to WD 22 radio conditions. Since power control-based inter-WD pre-emption may require the aggressor URLLC WD 22 to have enough power budget to increase power (i.e., the wireless device being not power limited), the WDs 22 satisfying this condition can be multiplexed in the same BWP with eMBB WDs 22 without PI monitoring capability. This is shown in FIG. 9, where URLLC WDs 22 that are not power limited, and eMBB WDs 22 without PI monitoring capability are grouped together and assigned to the BWP 2. While power-limited URLLC WDs 22 and eMBB WDs with PI monitoring capability are grouped together and assigned to another BWP, BWP 1.

In another embodiment, WD grouping can be performed, via the group assignment unit 32, on a resource block basis within one BWP.

In yet another embodiment, WD grouping can be performed, via the group assignment unit, based on spatial properties of eMBB and URLLC WDs 22. For example, based on UL channels, the network node 16 can, via processing circuitry 68, determine which and how well eMBB WDs 22 and URLLC WDs 22 can be multiplexed (for example, multi-user multiple input multiple output (MU-MIMO)). In an example of such an embodiment, the network node 16 may, via the processing circuitry 68, schedule eMBB WDs 22 such that there is a resource in the frequency domain for a potentially scheduled URLLC WD 22, where the potentially scheduled URLLC WD 22 is spatially separable from an eMBB WD 22 on the same resource.

In some embodiments non-UL-PI-capable WDs 22 are scheduled, via processing circuitry 68, if one or more of the following requirements/conditions are fulfilled/satisfied:
- A rank for eMBB WDs 22 does not exceed a threshold X (i.e., threshold rank), wherein the network node 16 may determine a lower rank for eMBB than what is "throughput optimal;"
- The number of receive antenna ports in network node 16 is at least a threshold Y (i.e., threshold number/quantity of receive antenna ports);
- An expected rank for potential URLLC WD's transmissions does not exceed a threshold Z (i.e., threshold rank); and
- A received power difference between potential URLLC WDs 22 multiplexed with eMBB WDs 22 is at least a threshold W (i.e., receive power difference threshold).

In another embodiment, grouping of a UL pre-empting WD 22 (also called an aggressor WD 22) and the two types of UL pre-empted WDs 22 (also called victim WDs 22) is performed, via the group assignment unit 32, according to component carriers in a carrier aggregation (CA).

In one example, for a UL component carrier with the aggressor WD 22, only victim WDs 22 with UL PI monitoring capability are allowed to be assigned, via the processing circuitry 68, to this UL component carrier, for example component carrier 1. WDs 22 without PI monitoring capability are assigned to a different UL component carrier (e.g., component carrier 2), where there are no aggressor WDs 22.

Since a WD 22 may behave as an aggressor WD 22 when it serves certain traffic types (e.g., aperiodic URLLC), but behave as a victim WD 22 when it serves other traffic types (e.g., eMBB, machine type communication (MTC)), a same WD 22 may be assigned, via processing circuitry 68, to different component carriers according to the traffic type that the WD 22 currently serves. For example, when the network node 16 receives an indication that the WD 22 is to start serving aperiodic URLLC traffic on the uplink, the network node 16 may, via processing circuitry 68, assign the WD 22 with component carrier 1 on the UL, where the WD 22 behaves as an aggressor WD 22 and transmits UL data for the aperiodic URLLC traffic. When the network node 16 receives an indication that the WD 22 is to terminate the aperiodic URLLC traffic on the uplink, the network node 16 may, via the processing circuitry 68, move the WD's UL to component carrier 2.

Note that for periodic URLLC traffic, UL Cell Group (CG) can be used to reserve resources for initial transmission and the WD 22 may not behave as an aggressor. For retransmission of an UL CG packet, the WD 22 may need to pre-empt other WDs 22' UL transmission in order to get the retransmission through quicker.

For a WD 22 that is serving eMBB and URLLC traffic simultaneously, the network node 16 may, via processing circuitry 68, assign the WD 22 two component carriers, where the WD 22 may use component carrier 1 to serve the URLLC traffic (hence, the WD 22 acts as an aggressor WD 22), whereas the WD 22 may use component carrier 2 to serve the eMBB traffic (hence, the WD 22 act as a victim WD 22).

In another embodiment, grouping of a UL pre-empting WD 22 (also called an aggressor WD 22, e.g., a WD 22 with UL URLLC service) and the two types of UL pre-empted WDs 22 (also called victim WDs 22) is performed, via the group assignment 32, according to different network nodes in a dual-connectivity configuration. The network node can be either a master network node 16 or a secondary network node 16.

In one example, for a network node (e.g., network node 16a) with the aggressor WD 22, only victim WDs 22 with UL PI monitoring capability may be allowed to be assigned to this network node. WDs 22 without PI monitoring capability are assigned to a different network node (e.g., network node 16b), where there is no aggressor WDs 22.

Similar to the CA case, in another example, a same WD 22 may be assigned, via the processing circuitry 68, to different network nodes according to the traffic type that the WD 22 currently serves. For example, when a master network node 16c receives an indication that the WD 22 is to start serving aperiodic URLLC traffic on the uplink, the master network node 16c assigns, via processing circuitry 68, network node 16a to the WD 22 as a serving network node 16, where the WD 22 can behave as an aggressor. When the master network node 16c receives, via radio interface 62 an indication that the WD 22 is to terminate the aperiodic URLLC traffic on the uplink, the master network node 16, via processing circuitry 68, deletes network node 16a from the WD's serving network node 16a set.

Similar to the CA case, in another example, for a WD 22 that is serving eMBB and URLLC traffic simultaneously, the master network node 16c may assign, via processing circuitry 68, the WD 22 two network nodes. The WD 22 uses network node 16a to serve the URLLC traffic (hence, the WD 22 act as an aggressor WD 22), whereas the WD 22 uses network node 16b to serve the eMBB traffic (hence, the WD 22 act as a victim WD 22).

### Downlink

In the downlink, co-existence of different traffic types may force the scheduler implemented by processing circuitry 68 of a network node 16 to interrupt/pre-empt ongoing transmission(s) and fully or partially replace the ongoing transmission(s) by another transmission. But in a current BWP candidate, victim WDs 22 may or may not be capable of receiving, via radio interface 82, a "preemption indication" (PI) message, due to lower capabilities. For WDs 22 without the DL pre-emption indication monitoring capability, the pre-emption may be more harmful, because such WDs 22 cannot flush, via its processing circuitry 84, the corrupted part of a soft-buffer, while WDs 22 having this capability can recover the transmission. To help avoid this situation, one or more scheduling techniques described herein can be used.

In a first embodiment, the scheduler, which may be implemented in processing circuitry 68, of network node 16 avoids pre-emption of WDs 22 which are not capable of receiving a "preemption indication" message, when avoiding pre-emption is possible, i.e., if there are other WDs 22 scheduled in BWP with the required capability and their allocated resources are enough for pre-emption.

In a second embodiment, the network node 16 allows co-existence of service types with different requirements (e.g., eMBB and URLLC) in one BWP only if potentially pre-empted WDs 22 are able to receive, via radio interface 82, a "preemption indication" message. In this case, WDs 22 without this capability will be allocated, via processing circuitry 68 of the network node 16, to another BWP.

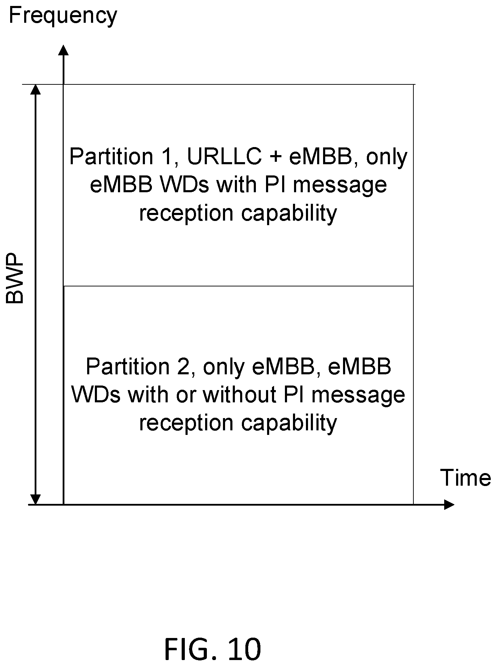

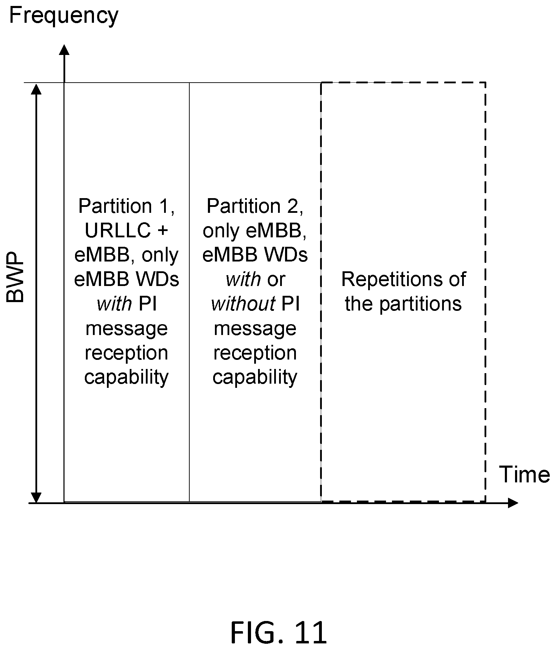

In a third embodiment, the network node 16, via processing circuitry 68, creates virtual partitions of a BWP in the frequency domain (FIG. 10) and/or the time domain (FIG. 11) and allows coexistence of service types with different requirements (e.g. eMBB and URLLC) only in a subset of partitions where the preemption is possible. Low priority data can be allocated in the partitions only if potentially preempted WDs 22 are able to receive, via radio interface 82, a "preemption indication" message. In this case, WDs 22 without this capability may be allocated to other partitions.

The grouping/partitioning can further, or alternatively, be based on spatial properties. The eMBB and URLLC WDs 22 scheduled in different beams may be MU-MIMO-scheduled without sacrificing reliability for URLLC WDs 22. For pre-coded transmission the grouping/partitioning, via processing circuitry 68 and group assignment unit 32, can be based on estimated spatial separateness of eMBB and URLLC WDs 22 using the reported pre-coders. The grouping can further be based on a number of WD 22 receive antenna ports and scheduled rank for eMBB WDs 22.

In some embodiments, the scheduler of network node 16 selects a lower rank or reduced power for one or more eMBB WDs 22 on resources where URLLC WDs 22 potentially need to be scheduled. In another embodiment, similar to the UL, grouping of DL preempting WDs 22 (also called aggressor WDs 22) and the two types of DL preempted WDs 22 (also called victim WDs 22) is performed according to component carriers in a carrier aggregation (CA). The two types of DL preempted WDs 22 refer to: non-DL-PI-capable WDs 22 and DL-PI-capable WDs 22.

In another embodiment, similar to the UL, grouping of DL preempting WDs 22 and the two types of UL preempted WDs 22 (also called victim WDs 22) is performed, via group assignment unit 32, according to different network nodes in a dual-connectivity configuration. The network node can be either a master network node 16 or a secondary network node 16.

### Additional Embodiments

Note that the grouping of one or more WDs 22 might be changed dynamically during communication and/or while the WD 22 is in connection with the network node 16, e.g. according to changes in communication conditions and/or service type. For example, if a service or communication according to a specific service type is established or released for a WD 22 (e.g., an URLLC service or communication) and/or a WD 22 changes position, a WD 22 might be associated with a different group (which might be dynamically set up or released, or be one of the groups already present) and/or be reassigned.

Thus, some embodiments include a method and a network node for assigning of resources based on grouping of wireless devices. According to one aspect, a network node has processing circuitry configured to perform method steps including assigning the WD to a group with other WDs 22 based at least in part on a service type of the WD. The assigning to a group is also based at least in part on one or more of: a preemption indication monitoring capability of the WD 22; or a power control capability of the WD 22; or a spatial separateness of the WD 22 with respect to other WDs 22. The processing circuitry is also configured to assign resources to the WD 22 according to the group to which the WD 22 is assigned.

According to this aspect, in some embodiments, a group to which the WD is assigned is one of: a first group of WDs 22 having different service types and being assigned a same first bandwidth part, and a second group of WDs 22 having a same service type and being assigned a same second bandwidth part. In some embodiments, the WD 22 that has an uplink preemption indication monitoring capability and is of a first service type is assigned the first bandwidth part and a WD 22 that does not have an uplink preemption indication monitoring capability and is of the first service type is assigned to the second bandwidth part. In some embodiments, if the WD 22 is power limited and of a first service type the WD 22 is assigned the first bandwidth part and if the WD 22 is not power limited and of the first service type the WD is assigned the second bandwidth part. In some embodiments, a same frequency resource is assigned to a first WD 22 of a first service type and to a second WD 22 of a second service type only if the first and second WDs 22 are spatially separable. In some embodiments, the WD 22 is assigned to uplink on a carrier associated with an aggressor WD 22 only if the WD 22 has an uplink preemption indication monitoring capability. In some embodiments, the processor is further configured to avoid scheduling of WDs 22 not capable of preemption indication monitoring in a bandwidth part when other WDs 22 that are capable of preemption indication monitoring are scheduled in the bandwidth part. In some embodiments, the network node allows coexistence of service types in a same bandwidth part only for WDs 22 that are capable of preemption indication monitoring are scheduled in the bandwidth part. In some embodiments, the network node partitions a bandwidth part in frequency or time to allocate a first part of the bandwidth part for WDs 22 having a same service type and to allocate a second part of the bandwidth part for WDs 22 having different service types.

Some embodiments may include one or more of the following:
- RANI to study the potential enhancements for UL inter WD Tx prioritization/multiplexing;
   ∘ Performance study of the enhanced UL inter WD Tx prioritization/multiplexing mechanisms using 3GPP Re-15 mechanisms as the performance benchmark;
      ▪ The use cases and scenarios adopted in L1 enhancements for URLLC are considered for the evaluation of UL inter WD Tx prioritization/multiplexing;
      ▪ Other factors to be considered such as overhead, capability, etc.
   ∘ Study the WD UL cancelation mechanisms, including at least the following aspects:
      ▪ The potential mechanisms may include WD UL cancelation/pausing indication, UL continuation indication, UL re-scheduling indication;
      ▪ Physical channel/signal used for the UL cancelation indication;
      ▪ UE Processing timeline for the UL cancelation indication;
      ▪ UE monitoring behaviors for the UL cancelation indication;
      ▪ UE PDCCH monitoring capability, if the UL cancelation indication is by PDCCH;
      ▪ Methods to ensure the reliability of the indication for WD UL cancelation;
   ∘ Study the UL power control enhancements; and/or
   ∘ Study other enhancements for the multiplexing between a grant-based UL transmission from a WD and a grant-free UL transmission from another WD.
- Potential UL power control enhancements are to be studied further:
   ∘ Enhanced dynamic power boost for URLLC WD;
      ▪ Dynamic change of power control parameters, e.g., P0, alpha without SRI configured;
      ▪ Enhanced TPC, e.g. increased TPC range, finer granularity;
      ▪ Currently, the need of URLLC WD power change during one transmission instance is not envisioned;
   ∘ Study the Enhanced dynamic power boost for URLLC WD, including at least the following aspects;
      ▪ Feasibility of boosting WD power in power limited or interference limited scenarios;
      ▪ Physical channel/signal used for the signaling;
      ▪ UE Processing timeline for the signaling;
      ▪ UE monitoring behaviors for the signaling;
      ▪ UE PDCCH monitoring capability, if the signaling is by PDCCH;
      ▪ Methods to ensure the reliability of the signaling; and/or
      ▪ Type of gNB receiver should be reported.
- Note:
   ∘ Other power control enhancements are not precluded.
   ∘ No change of eMBB WD power control scheme is assumed in this study.

For inter WD Tx prioritization/multiplexing, UL cancellation scheme and enhanced UL power control scheme may be supported in 3GPP Rel-16.

As will be appreciated by one of skill in the art, the concepts described herein may be embodied as a method, data processing system, computer program product and/or computer storage media storing an executable computer program. Accordingly, the concepts described herein may take the form of an entirely hardware embodiment, an entirely software embodiment or an embodiment combining software and hardware aspects all generally referred to herein as a "circuit" or "module." Any process, step, action and/or functionality described herein may be performed by, and/or associated to, a corresponding module, which may be implemented in software and/or firmware and/or hardware. Furthermore, the disclosure may take the form of a computer program product on a tangible computer usable storage medium having computer program code embodied in the medium that can be executed by a computer. Any suitable tangible computer readable medium may be utilized including hard disks, CD-ROMs, electronic storage devices, optical storage devices, or magnetic storage devices.

Some embodiments are described herein with reference to flowchart illustrations and/or block diagrams of methods, systems and computer program products. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer (to thereby create a special purpose computer), special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable memory or storage medium that can direct a computer or other programmable data processing apparatus to function in a particular manner, such that the instructions stored in the computer readable memory produce an article of manufacture including instruction means which implement the function/act specified in the flowchart and/or block diagram block or blocks.

The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide steps for implementing the functions/acts specified in the flowchart and/or block diagram block or blocks.

It is to be understood that the functions/acts noted in the blocks may occur out of the order noted in the operational illustrations. For example, two blocks shown in succession may in fact be executed substantially concurrently or the blocks may sometimes be executed in the reverse order, depending upon the functionality/acts involved. Although some of the diagrams include arrows on communication paths to show a primary direction of communication, it is to be understood that communication may occur in the opposite direction to the depicted arrows.

Computer program code for carrying out operations of the concepts described herein may be written in an object oriented programming language such as Java^{®} or C++. However, the computer program code for carrying out operations of the disclosure may also be written in conventional procedural programming languages, such as the "C" programming language. The program code may execute entirely on the user's computer, partly on the user's computer, as a stand-alone software package, partly on the user's computer and partly on a remote computer or entirely on the remote computer. In the latter scenario, the remote computer may be connected to the user's computer through a local area network (LAN) or a wide area network (WAN), or the connection may be made to an external computer (for example, through the Internet using an Internet Service Provider).

Many different embodiments have been disclosed herein, in connection with the above description and the drawings. It will be understood that it would be unduly repetitious and obfuscating to literally describe and illustrate every combination and subcombination of these embodiments. Accordingly, all embodiments can be combined in any way and/or combination, and the present specification, including the drawings, shall be construed to constitute a complete written description of all combinations and subcombinations of the embodiments described herein, and of the manner and process of making and using them, and shall support claims to any such combination or subcombination.

Abbreviations that may be used in the preceding description include:

| Abbreviation | Explanation |
|---|---|
| BWP | Bandwidth Part |
| NR | New Radio |
| OFDM | Orthogonal Frequency-Division Multiplexing |
| PI | Pre-emption indication |
| PRB | Physical Resource Block |
| RV | Redundancy Version |
| URLLC | Ultra Reliable Low Latency Communication |

It will be appreciated by persons skilled in the art that the embodiments described herein are not limited to what has been particularly shown and described herein above. In addition, unless mention was made above to the contrary, it should be noted that all of the accompanying drawings are not to scale. A variety of modifications and variations are possible in light of the above teachings without departing from the scope of the following claims.

## Claims

1. A network node (16) configured to communicate with a wireless device (22), WD, the network node (16) comprising processing circuitry (68), the processing circuitry (68) configured to cause the network node (16) to:
assign the wireless device (22) to a group with other wireless devices (22) based at least in part on a service type of the wireless device (22) and based at least in part on at least one of:
a preemption indication monitoring capability of the wireless device (22);
a power control capability of the wireless device (22); and
a spatial separateness of the wireless device (22) with respect to at least one of the other wireless devices (22); and
assign at least one resource to the wireless device (22) according to the group to which the wireless device (22) is assigned, wherein the preemption indication monitoring capability of the wireless device (22) corresponds to whether the wireless device (22) is capable of monitoring for an inter-WD uplink preemption indication message from the network node (16), wherein the power control capability of the wireless device (22) corresponds to whether the wireless device (22) is capable of an enhanced dynamic uplink, UL, power control boost, and wherein the spatial separateness of the wireless device (22) corresponds to whether the wireless device (22) can be scheduled on a same time-frequency resource as the at least one of the other wireless devices (22) based at least in part on the spatial separateness of the wireless device (22) with respect to the at least one of the other wireless devices (22).

2. The network node (16) of Claim 1, wherein the group to which the wireless device (22) is assigned is one of:
a first group of wireless devices (22) having different service types and being assigned a same first bandwidth part; and
a second group of wireless devices (22) having a same service type and being assigned a same second bandwidth part,
wherein the processing circuitry (68) is further configured to cause the network node (16) to assign the at least one resource to the wireless device (22) by being configured to cause the network node (16) to:
assign the first bandwidth part to the wireless device (22) if the wireless device (22) has the preemption indication monitoring capability and is of a first service type and assign the second bandwidth part to the wireless device (22) if the wireless device (22) does not have the preemption indication monitoring capability and is of the first service type.

3. The network node (16) of Claim 1, wherein the group to which the wireless device (22) is assigned is one of:
a first group of wireless devices (22) having different service types and being assigned a same first bandwidth part; and
a second group of wireless devices (22) having different service types and being assigned a same second bandwidth part,
wherein the processing circuitry (68) is further configured to cause the network node (16) to assign the at least one resource to the wireless device (22) by being configured to cause the network node (16) to:
assign the first bandwidth part to the wireless device (22) if the wireless device (22) is power limited and is of a first service type and assign the second bandwidth part to the wireless device (22) if the wireless device (22) is not power limited and is of the first service type.

4. The network node (16) of Claim 3, wherein the wireless device (22) being power limited corresponds to one of:
the wireless device (22) lacking the power control capability; and
the wireless device (22) having the power control capability and using a maximum transmit power level; and
wherein the wireless device (22) being not power limited corresponds to:
the wireless device (22) having the power control capability and the wireless device (22) having sufficient power to increase transmit power without exceeding the maximum transmit power level.

5. The network node (16) of Claim 1, wherein the processing circuitry (68) is further configured to cause the network node (16) to assign the at least one resource to the wireless device (22) by being configured to cause the network node (16) to:
assign a same frequency resource to a first wireless device (22) of a first service type and to a second wireless device (22) of a second service type if the first wireless device (22) and the second wireless device (22) are spatially separable; or
assign the wireless device (22) to uplink on a carrier associated with an aggressor wireless device (22) if the wireless device (22) has the preemption indication monitoring capability.

6. The network node (16) of Claim 1, wherein the processing circuitry (68) is configured to cause the network node (16) to:
avoid scheduling of wireless devices (22) that are not capable of the preemption indication monitoring in a bandwidth part when other wireless devices (22) that are capable of preemption indication monitoring are scheduled in the bandwidth part.

7. The network node (16) of Claim 1, wherein the processing circuitry (68) is configured to cause the network node (16) to:
allow coexistence of first and second service types in a same bandwidth part if wireless devices (22) with the first service type that are scheduled in the bandwidth part are capable of the preemption indication monitoring.

8. The network node (16) of Claim 1, wherein the processing circuitry (68) is configured to cause the network node (16) to:
partition a bandwidth part in at least one of frequency and time to allocate a first part of the bandwidth part for wireless devices (22) having a same service type and to allocate a second part of the bandwidth part for wireless devices (22) having different service types.

9. The network node (16) of any one of Claims 1-6, wherein the service type of the wireless device (22) corresponds to one of enhanced mobile broadband, eMBB, and ultra-reliable low latency communications, URLLC.

10. The network node (16) of Claim 9, wherein the processing circuitry (68) is further configured to cause the network node (16) to assign the wireless device (22) to a group with other wireless devices (22) by being configured to cause the network node (16) to:
assign the wireless device (22) to a first group of wireless devices (22) being assigned to a first bandwidth part if the wireless device (22) at least one of corresponds to the URLLC service type and has the preemption indication monitoring capability; and
assign the wireless device (22) to a second group of wireless devices (22) being assigned to a second bandwidth part if the wireless device (22) corresponds to the eMBB service type and does not have the preemption indication monitoring capability.

11. The network node (16) of Claim 9, wherein the processing circuitry (68) is further configured to cause the network node (16) to assign the wireless device (22) to a group with other wireless devices (22) by being configured to cause the network node (16) to:
assign the wireless device (22) to a first group of wireless devices (22) being assigned to a first bandwidth part if the wireless device (22) at least one of:
is power limited and is of the URLLC service type; and
has the preemption indication monitoring capability and is of the eMBB service type; and
assign the wireless device (22) to a second group of wireless devices (22) being assigned to a second bandwidth part if the wireless device (22) at least one of:
is not power limited and is of the URLLC service type; and
does not have the preemption indication monitoring capability and is of the eMBB service type.

12. A method implemented in a network node (16) configured to communicate with a wireless device (22), WD, the method comprising:
assigning (S134) the wireless device (22) to a group with other wireless devices (22) based at least in part on a service type of the wireless device (22) and based at least in part on at least one of:
a preemption indication monitoring capability of the wireless device (22);
a power control capability of the wireless device (22); and
a spatial separateness of the wireless device (22) with respect to at least one of the other wireless devices (22); and
assigning (S136) at least one resource to the wireless device (22) according to the group to which the wireless device (22) is assigned, wherein the preemption indication monitoring capability of the wireless device (22) corresponds to whether the wireless device (22) is capable of monitoring for an inter-WD uplink preemption indication message from the network node (16), wherein the power control capability of the wireless device (22) corresponds to whether the wireless device (22) is capable of an enhanced dynamic uplink, UL, power control boost, and wherein the spatial separateness of the wireless device (22) corresponds to whether the wireless device (22) can be scheduled on a same time-frequency resource as the at least one of the other wireless devices (22) based at least in part on the spatial separateness of the wireless device (22) with respect to the at least one of the other wireless devices (22).

## Patentansprüche

1. Netzknoten (16), der konfiguriert ist, um mit einer drahtlosen Vorrichtung (22), WD, zu kommunizieren, wobei der Netzknoten (16) eine Verarbeitungsschaltlogik (68) umfasst, wobei die Verarbeitungsschaltlogik (68) konfiguriert ist, um den Netzknoten (16) zu veranlassen zum:
Zuweisen der drahtlosen Vorrichtung (22) zu einer Gruppe mit anderen drahtlosen Vorrichtungen (22), basierend zumindest teilweise auf einem Diensttyp der drahtlosen Vorrichtung (22) und basierend zumindest teilweise auf mindestens einem von
einer Überwachungsfunktion für die Vorranganzeige der drahtlosen Vorrichtung (22);
einer Leistungssteuerungsfunktion der drahtlosen Vorrichtung (22); und
einer räumlichen Trennung der drahtlosen Vorrichtung (22) in Bezug auf zumindest eine der anderen drahtlosen Vorrichtungen (22); und
Zuweisen von mindestens einer Ressource zu der drahtlosen Vorrichtung (22) entsprechend der Gruppe, der die drahtlose Vorrichtung (22) zugewiesen ist, wobei die Überwachungsfunktion für die Vorranganzeige der drahtlosen Vorrichtung (22) damit übereinstimmt, ob die drahtlose Vorrichtung (22) in der Lage ist, auf eine Inter-WD-Uplink-Vorranganzeigenachricht vom Netzknoten (16) zu überwachen, wobei die Leistungssteuerungsfunktion der drahtlosen Vorrichtung (22) damit übereinstimmt, ob die drahtlose Vorrichtung (22) zu einer verbesserten dynamischen Uplink-Leistungssteuerungsverstärkung, UL-Leistungssteuerungsverstärkung, in der Lage ist, und wobei die räumliche Trennung der drahtlosen Vorrichtung (22) damit übereinstimmt, ob die drahtlose Vorrichtung (22) auf derselben Zeit-Frequenz-Ressource wie die mindestens eine der anderen drahtlosen Vorrichtungen (22) geplant werden kann, zumindest teilweise basierend auf der räumlichen Trennung der drahtlosen Vorrichtung (22) in Bezug auf die mindestens eine der anderen drahtlosen Vorrichtungen (22).

2. Netzknoten (16) nach Anspruch 1, wobei die Gruppe, der die drahtlose Vorrichtung (22) zugewiesen ist, eine der Folgenden ist:
eine erste Gruppe von drahtlosen Vorrichtungen (22), die unterschiedliche Diensttypen aufweisen und denen der gleiche erste Bandbreitenteil zugewiesen ist; und
eine zweite Gruppe von drahtlosen Vorrichtungen (22), die den gleichen Diensttyp aufweisen und denen ein gleicher zweiter Bandbreitenanteil zugewiesen ist,
wobei die Verarbeitungsschaltlogik (68) ferner dazu konfiguriert ist, den Netzknoten (16) zu veranlassen, die mindestens eine Ressource der drahtlosen Vorrichtung (22) zuzuweisen, indem sie dazu konfiguriert ist, den Netzknoten (16) zu veranlassen zum:
Zuweisen des ersten Bandbreitenteils zu der drahtlosen Vorrichtung (22), wenn die drahtlose Vorrichtung (22) über die Fähigkeit zur Überwachung der Vorranganzeige verfügt und von einem ersten Diensttyp ist, und Zuweisen des zweiten Bandbreitenteils zu der drahtlosen Vorrichtung (22), wenn die drahtlose Vorrichtung (22) nicht über die Fähigkeit zur Überwachung der Vorranganzeige verfügt und vom ersten Diensttyp ist.

3. Netzknoten (16) nach Anspruch 1, wobei die Gruppe, der die drahtlose Vorrichtung (22) zugewiesen ist, eine der Folgenden ist:
eine erste Gruppe von drahtlosen Vorrichtungen (22), die unterschiedliche Diensttypen aufweisen und denen der gleiche erste Bandbreitenteil zugewiesen ist; und
eine zweite Gruppe von drahtlosen Vorrichtungen (22) mit unterschiedlichen Diensttypen, denen ein gleicher zweiter Bandbreitenteil zugewiesen ist, wobei die Verarbeitungsschaltlogik (68) ferner dazu konfiguriert ist, den Netzknoten (16) zu veranlassen, die mindestens eine Ressource der drahtlosen Vorrichtung (22) zuzuweisen, indem sie dazu konfiguriert ist, den Netzknoten (16) zu veranlassen zum:
Zuweisen des ersten Bandbreitenanteils zu der drahtlosen Vorrichtung (22), wenn die drahtlose Vorrichtung (22) leistungsbegrenzt ist und von einem ersten Diensttyp ist, und Zuweisen des zweiten Bandbreitenanteils zu der drahtlosen Vorrichtung (22), wenn die drahtlose Vorrichtung (22) nicht leistungsbegrenzt ist und vom ersten Diensttyp ist.

4. Netzknoten (16) nach Anspruch 3, wobei die drahtlose Vorrichtung (22), die leistungsbegrenzt ist, einem der Folgenden entspricht:
der drahtlosen Vorrichtung (22) fehlt die Fähigkeit zur Leistungssteuerung; und
wobei die drahtlose Vorrichtung (22) über die Fähigkeit zur Leistungssteuerung verfügt und einen maximalen Sendeleistungspegel verwendet; und
wobei die drahtlose Vorrichtung (22) nicht leistungsbegrenzt ist und Folgendem entspricht:
die drahtlose Vorrichtung (22) über die Fähigkeit zur Leistungsregelung verfügt und wobei die drahtlose Vorrichtung (22) über ausreichend Leistung verfügt, um die Sendeleistung zu erhöhen, ohne den maximalen Sendeleistungspegel zu überschreiten.

5. Netzknoten (16) nach Anspruch 1, wobei die Verarbeitungsschaltlogik (68) ferner so konfiguriert ist, dass sie den Netzknoten (16) veranlasst, die mindestens eine Ressource der drahtlosen Vorrichtung (22) zuzuweisen, indem sie konfiguriert ist, um den Netzknoten (16) zu veranlassen zum:
Zuweisen einer gleichen Frequenzressource zu einer ersten drahtlosen Vorrichtung (22) eines ersten Diensttyps und zu einer zweiten drahtlosen Vorrichtung (22) eines zweiten Diensttyps, wenn die erste drahtlose Vorrichtung (22) und die zweite drahtlose Vorrichtung (22) räumlich getrennt sind; oder
Zuweisen der drahtlosen Vorrichtung (22) zu einem Uplink auf einem Träger, der mit einer drahtlosen Aggressorvorrichtung (22) verbunden ist, wenn die drahtlose Vorrichtung (22) über die Funktion zur Überwachung der Vorranganzeige verfügt.

6. Netzknoten (16) nach Anspruch 1, wobei die Verarbeitungsschaltlogik (68) konfiguriert ist, um den Netzknoten (16) zu veranlassen zum:
Vermeiden von Planung von drahtlosen Vorrichtungen (22), die nicht zur Überwachung der Vorranganzeige in einem Bandbreitenteil fähig sind, wenn andere drahtlose Vorrichtungen (22), die zur Überwachung der Vorranganzeige fähig sind, in dem Bandbreitenteil geplant sind.

7. Netzknoten (16) nach Anspruch 1, wobei die Verarbeitungsschaltlogik (68) konfiguriert ist, um den Netzknoten (16) zu veranlassen zum:
Erlauben von Koexistenz von ersten und zweiten Diensttypen in einem gleichen Bandbreitenteil, wenn drahtlose Vorrichtungen (22) mit dem ersten Diensttyp, die in dem Bandbreitenteil geplant sind, zur Überwachung der Vorranganzeige in der Lage sind.

8. Netzknoten (16) nach Anspruch 1, wobei die Verarbeitungsschaltlogik (68) konfiguriert ist, um den Netzknoten (16) zu veranlassen zum:
Partitionieren eines Bandbreitenteils in mindestens eines von Frequenz und Zeit, um einen ersten Teil des Bandbreitenteils für drahtlose Vorrichtungen (22) mit einem gleichen Diensttyp zuzuweisen und einen zweiten Teil des Bandbreitenteils für drahtlose Vorrichtungen (22) mit unterschiedlichen Diensttypen zuzuweisen.

9. Netzknoten (16) nach einem der Ansprüche 1 bis 6, wobei der Diensttyp der drahtlosen Vorrichtung (22) einem der folgenden Typen entspricht: Enhanced Mobile Broadband, eMBB, und Ultra-Reliable Low Latency Communications, URLLC.

10. Netzknoten (16) nach Anspruch 9, wobei die Verarbeitungsschaltlogik (68) ferner konfiguriert ist, um den Netzknoten (16) zu veranlassen, die drahtlose Vorrichtung (22) einer Gruppe mit anderen drahtlosen Vorrichtungen (22) zuzuweisen, indem sie konfiguriert ist, um den Netzknoten (16) zu veranlassen zum:
Zuweisen der drahtlosen Vorrichtung (22) zu einer ersten Gruppe von drahtlosen Vorrichtungen (22), die einem ersten Bandbreitenteil zugewiesen sind, wenn die drahtlose Vorrichtung (22) mindestens eine der folgenden Bedingungen erfüllt: entspricht dem Diensttyp URLLC und/oder verfügt über die Fähigkeit zur Überwachung der Vorranganzeige; und
Zuweisen der drahtlosen Vorrichtung (22) zu einer zweiten Gruppe von drahtlosen Vorrichtungen (22), denen ein zweiter Bandbreitenteil zugewiesen wird, wenn die drahtlose Vorrichtung (22) dem Diensttyp eMBB entspricht und nicht über die Fähigkeit zur Überwachung der Vorranganzeige verfügt.

11. Netzknoten (16) nach Anspruch 9, wobei die Verarbeitungsschaltlogik (68) ferner konfiguriert ist, um den Netzknoten (16) zu veranlassen, die drahtlose Vorrichtung (22) einer Gruppe mit anderen drahtlosen Vorrichtungen (22) zuzuweisen, indem sie konfiguriert ist, um den Netzknoten (16) zu veranlassen zum:
Zuweisen der drahtlosen Vorrichtung (22) zu einer ersten Gruppe von drahtlosen Vorrichtungen (22), die einem ersten Bandbreitenteil zugewiesen sind, wenn die drahtlose Vorrichtung (22) mindestens eines ist von
leistungsbegrenzt und zum Diensttyp URLLC gehörend; und
über die Funktion zur Überwachung der Vorranganzeige verfügt und vom Diensttyp eMBB ist; und
Zuweisen der drahtlosen Vorrichtung (22) zu einer zweiten Gruppe von drahtlosen Vorrichtungen (22), denen ein zweiter Bandbreitenteil zugewiesen ist, wenn die drahtlose Vorrichtung (22) mindestens eines der folgenden Merkmale aufweist:
ist nicht leistungsbegrenzt und ist vom Diensttyp URLLC; und
verfügt nicht über die Funktion zur Überwachung der Vorranganzeige und ist vom Diensttyp eMBB.

12. Verfahren, das in einem Netzknoten (16) implementiert ist, der für die Kommunikation mit einer drahtlosen Vorrichtung (22), WD, konfiguriert ist, wobei das Verfahren umfasst:
Zuweisen (S134) der drahtlosen Vorrichtung (22) zu einer Gruppe mit anderen drahtlosen Vorrichtungen (22) zumindest teilweise basierend auf einem Diensttyp der drahtlosen Vorrichtung (22) und zumindest teilweise basierend auf mindestens einem der folgenden Punkte:
einer Überwachungsfunktion für die Vorranganzeige der drahtlosen Vorrichtung (22);
einer Leistungssteuerungsfunktion der drahtlosen Vorrichtung (22); und
einer räumlichen Trennung der drahtlosen Vorrichtung (22) in Bezug auf zumindest eine der anderen drahtlosen Vorrichtungen (22); und
Zuweisen (S136) von mindestens einer Ressource zu der drahtlosen Vorrichtung (22) entsprechend der Gruppe, zu der die drahtlose Vorrichtung (22) zugewiesen ist, wobei die Überwachungsfunktion der Vorranganzeige der drahtlosen Vorrichtung (22) damit übereinstimmt, ob die drahtlose Vorrichtung (22) in der Lage ist, auf eine Inter-WD-Uplink-Vorranganzeigenachricht von dem Netzknoten (16) zu überwachen, wobei die Leistungssteuerungsfunktion der drahtlosen Vorrichtung (22) damit übereinstimmt, ob die drahtlose Vorrichtung (22) zu einer verbesserten dynamischen Uplink-Leistungssteuerungsverstärkung, UL-Leistungssteuerungsverstärkung, in der Lage ist, und wobei die räumliche Trennung der drahtlosen Vorrichtung (22) damit übereinstimmt, ob die drahtlose Vorrichtung (22) auf derselben Zeit-Frequenz-Ressource wie die mindestens eine der anderen drahtlosen Vorrichtungen (22) eingeplant werden kann, basierend zumindest teilweise auf der räumlichen Trennung der drahtlosen Vorrichtungen (22) in Bezug auf die mindestens eine der anderen drahtlosen Vorrichtungen (22).

## Revendications

1. Nœud de réseau (16) configuré pour communiquer avec un dispositif
sans fil (22), WD, le nœud de réseau (16) comprenant une circuiterie de traitement (68), la circuiterie de traitement (68) étant configurée pour amener le nœud de réseau (16) à :
attribuer le dispositif sans fil (22) à un groupe avec d'autres dispositifs sans fil (22) sur la base, au moins en partie, d'un type de service du dispositif sans fil (22) et sur la base, au moins en partie, d'au moins l'une parmi
une capacité de surveillance d'indication de préemption du dispositif sans fil (22) ;
une capacité de commande de puissance du dispositif sans fil (22) ; et
une séparation spatiale du dispositif sans fil (22) par rapport à au moins l'un parmi les autres dispositifs sans fil (22) ; et
attribuer au moins une ressource au dispositif sans fil (22) selon le groupe auquel le dispositif sans fil (22) est attribué, dans lequel la capacité de surveillance d'indication de préemption du dispositif sans fil (22) correspond au fait de savoir si le dispositif sans fil (22) est capable de surveiller un message d'indication de préemption de liaison montante inter-WD provenant du nœud de réseau (16), dans lequel la capacité de commande de puissance du dispositif sans fil (22) correspond au fait de savoir si le dispositif sans fil (22) est capable d'une amplification de commande de puissance de liaison montante, UL, dynamique améliorée, et dans lequel la séparation spatiale du dispositif sans fil (22) correspond au fait de savoir si le dispositif sans fil (22) peut être programmé sur une même ressource temps-fréquence que l'au moins un parmi les autres dispositifs sans fil (22) sur la base, au moins en partie, de la séparation spatiale du dispositif sans fil (22) par rapport à l'au moins un parmi les autres dispositifs sans fil (22).

2. Nœud de réseau (16) selon la revendication 1, dans lequel le groupe auquel le dispositif sans fil (22) est attribué est l'un parmi :
un premier groupe de dispositifs sans fil (22) ayant différents types de services et se voyant attribuer une même première partie de bande passante ; et
un second groupe de dispositifs sans fil (22) ayant un même type de service et se voyant attribuer une même seconde partie de bande passante,
dans lequel la circuiterie de traitement (68) est en outre configurée pour amener le nœud de réseau (16) à attribuer l'au moins une ressource au dispositif sans fil (22) en étant configurée pour amener le nœud de réseau (16) à :
attribuer la première partie de bande passante au dispositif sans fil (22) si le dispositif sans fil (22) a la capacité de surveillance d'indication de préemption et est d'un premier type de service et attribuer la seconde partie de bande passante au dispositif sans fil (22) si le dispositif sans fil (22) n'a pas la capacité de surveillance d'indication de préemption et est du premier type de service.

3. Nœud de réseau (16) selon la revendication 1, dans lequel le groupe auquel le dispositif sans fil (22) est attribué est l'un parmi :
un premier groupe de dispositifs sans fil (22) ayant différents types de services et se voyant attribuer une même première partie de bande passante ; et
un second groupe de dispositifs sans fil (22) ayant différents types de service et se voyant attribuer une même seconde partie de bande passante, dans lequel la circuiterie de traitement (68) est en outre configurée pour amener le nœud de réseau (16) à attribuer l'au moins une ressource au dispositif sans fil (22) en étant configurée pour amener le nœud de réseau (16) à :
attribuer la première partie de bande passante au dispositif sans fil (22) si le dispositif sans fil (22) est limité en puissance et est d'un premier type de service, et attribuer la seconde partie de bande passante au dispositif sans fil (22) si le dispositif sans fil (22) n'est pas limité en puissance et est du premier type de service.

4. Nœud de réseau (16) selon la revendication 3, dans lequel le dispositif sans fil (22) dont la puissance est limitée correspond à l'un parmi
le dispositif sans fil (22) n'ayant pas la capacité de commande de puissance ; et
le dispositif sans fil (22) ayant la capacité de commande de puissance et utilisant un niveau de puissance d'émission maximal ; et
dans lequel le dispositif sans fil (22) n'étant pas limité en puissance correspond à :
le dispositif sans fil (22) ayant la capacité de commande de puissance et le dispositif sans fil (22) ayant une puissance suffisante pour augmenter la puissance d'émission sans dépasser le niveau de puissance d'émission maximale.

5. Nœud de réseau (16) selon la revendication 1, dans lequel la circuiterie de traitement (68) est en outre configurée pour amener le nœud de réseau (16) à attribuer l'au moins une ressource au dispositif sans fil (22) en étant configurée pour amener le nœud de réseau (16) à :
attribuer une même ressource de fréquence à un premier dispositif sans fil (22) d'un premier type de service et à un second dispositif sans fil (22) d'un second type de service si le premier dispositif sans fil (22) et le second dispositif sans fil (22) sont séparables dans l'espace ; ou
attribuer le dispositif sans fil (22) à la liaison montante sur une porteuse associée à un dispositif sans fil agresseur (22) si le dispositif sans fil (22) a la capacité de surveillance d'indication de préemption.

6. Nœud de réseau (16) selon la revendication 1, dans lequel la circuiterie de traitement (68) est configurée pour amener le nœud de réseau (16) à :
éviter la programmation de dispositifs sans fil (22) qui ne sont pas capables de surveillance d'indication de préemption dans une partie de bande passante lorsque d'autres dispositifs sans fil (22) qui sont capables de surveillance d'indication de préemption sont programmés dans la partie de bande passante.

7. Nœud de réseau (16) selon la revendication 1, dans lequel la circuiterie de traitement (68) est configurée pour amener le nœud de réseau (16) à :
permettre la coexistence des premier et second types de service dans une même partie de bande passante si les dispositifs sans fil (22) du premier type de service qui sont programmés dans la partie de bande passante sont capables de surveillance d'indication de préemption.

8. Nœud de réseau (16) selon la revendication 1, dans lequel la circuiterie de traitement (68) est configurée pour amener le nœud de réseau (16) à :
partitionner une partie de bande passante en au moins une fréquence et un temps afin d'attribuer une première partie de la partie de bande passante à des dispositifs sans fil (22) ayant un même type de service et d'attribuer une seconde partie de la partie de bande passante à des dispositifs sans fil (22) ayant différents types de service.

9. Nœud de réseau (16) selon l'une quelconque des revendications 1 à 6, dans lequel le type de service du dispositif sans fil (22) correspond à l'un parmi une large bande mobile améliorée, eMBB, et des communications ultra-fiables à faible latence, URLLC.

10. Nœud de réseau (16) selon la revendication 9, dans lequel la circuiterie de traitement (68) est en outre configurée pour amener le nœud de réseau (16) à attribuer le dispositif sans fil (22) à un groupe avec d'autres dispositifs sans fil (22) en étant configurée pour amener le nœud de réseau (16) à :
attribuer le dispositif sans fil (22) à un premier groupe de dispositifs sans fil (22) attribués à une première partie de bande passante si le dispositif sans fil (22) au moins l'un parmi correspond au type de service URLLC et a la capacité de surveillance d'indication de préemption ; et
attribuer le dispositif sans fil (22) à un second groupe de dispositifs sans fil (22) attribués à une seconde partie de bande passante si le dispositif sans fil (22) correspond au type de service eMBB et n'a pas la capacité de surveillance d'indication de préemption.

11. Nœud de réseau (16) selon la revendication 9, dans lequel la circuiterie de traitement (68) est en outre configurée pour amener le nœud de réseau (16) à attribuer le dispositif sans fil (22) à un groupe avec d'autres dispositifs sans fil (22) en étant configurée pour amener le nœud de réseau (16) à :
attribuer le dispositif sans fil (22) à un premier groupe de dispositifs sans fil (22) attribués à une première partie de bande passante si le dispositif sans fil (22) au moins l'un parmi
est limité en puissance et est du type de service URLLC ; et
a la capacité de surveillance d'indication de préemption et est du type de service eMBB ; et
attribuer le dispositif sans fil (22) à un second groupe de dispositifs sans fil (22) attribués à une seconde partie de bande passante si le dispositif sans fil (22) au moins l'un parmi :
n'est pas limité en puissance et est du type de service URLLC ; et
n'a pas la capacité de surveillance d'indication de préemption et est du type de service eMBB.

12. Procédé mis en œuvre dans un nœud de réseau (16) configuré pour communiquer avec un dispositif sans fil (22), WD, le procédé comprenant :
l'attribution (S134) du dispositif sans fil (22) à un groupe avec d'autres dispositifs sans fil (22) sur la base, au moins en partie, d'un type de service du dispositif sans fil (22) et sur la base, au moins en partie, d'au moins l'une parmi :
une capacité de surveillance d'indication de préemption du dispositif sans fil (22) ;
une capacité de commande de puissance du dispositif sans fil (22) ; et
une séparation spatiale du dispositif sans fil (22) par rapport à au moins l'un parmi les autres dispositifs sans fil (22) ; et
l'attribution (S136) d'au moins une ressource au dispositif sans fil (22) selon le groupe auquel le dispositif sans fil (22) est attribué, dans lequel la capacité de surveillance d'indication de préemption du dispositif sans fil (22) correspond au fait de savoir si le dispositif sans fil (22) est capable de surveiller un message d'indication de préemption de liaison montante inter-WD provenant du nœud de réseau (16), dans lequel la capacité de commande de puissance du dispositif sans fil (22) correspond au fait de savoir si le dispositif sans fil (22) est capable d'une amplification de commande de puissance de liaison montante, UL, dynamique améliorée, et dans lequel la séparation spatiale du dispositif sans fil (22) correspond au fait de savoir si le dispositif sans fil (22) peut être programmé sur une même ressource temps-fréquence que l'au moins un parmi les autres dispositifs sans fil (22) sur la base, au moins en partie, de la séparation spatiale du dispositif sans fil (22) par rapport à l'au moins un parmi les autres dispositifs sans fil (22).
